(19)

Europäisches Patentamt

European Patent Office

Office européen des brevets

(11) **EP 4 538 691 A1**

(12) **EUROPEAN PATENT APPLICATION**
published in accordance with Art. 153(4) EPC

(43) Date of publication:
**16.04.2025 Bulletin 2025/16**

(21) Application number: **23819616.6**

(22) Date of filing: **19.05.2023**

(51) International Patent Classification (IPC):
**G01N 27/30** (2006.01)   **G01N 27/416** (2006.01)
**G01N 27/48** (2006.01)

(52) Cooperative Patent Classification (CPC):
**G01N 27/30; G01N 27/416; G01N 27/48**

(86) International application number:
**PCT/JP2023/018724**

(87) International publication number:
**WO 2023/238632 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.06.2022 JP 2022094415**

(71) Applicant: **Sumitomo Chemical Company, Limited
Tokyo 103-6020 (JP)**

(72) Inventors:
• **YOKOYAMA Masafumi
Hitachi-shi, Ibaraki 319-1418 (JP)**
• **KURIHARA Kaori
Hitachi-shi, Ibaraki 319-1418 (JP)**
• **EINAGA Yasuaki
Yokohama-shi, Kanagawa 223-8522 (JP)**
• **MURATA Michio
Yokohama-shi, Kanagawa 223-8522 (JP)**
• **AKAI Kazumi
Yokohama-shi, Kanagawa 223-8522 (JP)**

(74) Representative: **Vossius & Partner
Patentanwälte Rechtsanwälte mbB
Siebertstrasse 3
81675 München (DE)**

(54) **ELECTROCHEMICAL SENSOR, AND METHOD FOR PRODUCING ELECTROCHEMICAL SENSOR**

(57)    The present disclosure involves a first diamond electrode as a working electrode and a second diamond electrode as a reference electrode, wherein a current peak corresponding to an ozone concentration in a test solution is observed in a voltammogram obtained by linear sweep voltammetry measurement in which the first diamond electrode and the second diamond electrode are brought into contact with the test solution, the test solution containing ozone at a predetermined concentration.

**FIG. 1**

**EP 4 538 691 A1**

**Description**

TECHNICAL FIELD

The present disclosure relates to an electrochemical sensor and method of manufacturing an electrochemical sensor.

BACKGROUND ART

As an electrochemical sensor for measuring an ozone concentration in a test solution containing ozone at a predetermined concentration, a sensor in which a working electrode is constituted of a diamond electrode and a reference electrode is constituted of a silver/silver chloride electrode has been proposed. A diamond electrode is an electrode including a conductive substrate and an electrode film formed on the conductive substrate and constituted of polycrystalline diamond. A silver/silver chloride electrode is obtained by covering the surface of silver with silver chloride and immersing the resultant in a chloride aqueous solution such as a saturated potassium chloride aqueous solution. Here, the silver/silver chloride electrode requires the presence of a solution containing chloride ions in the system, which makes solution management difficult. In addition, since the silver/silver chloride electrode has a glass member, care must be taken in handling same. Furthermore, when a silver/silver chloride electrode is used, it is difficult to obtain a small electrochemical sensor. As such, an electrochemical sensor in which not only the working electrode but also the reference electrode is constituted of a diamond electrode has been proposed (see, for example, Patent Document 1).

PRIOR ART DOCUMENT

PATENT DOCUMENT

Patent Document 1: JPWO2020091033A1

SUMMARY

PROBLEMS TO BE SOLVED BY THE DISCLOSURE

The configuration in Patent Document 1 solves problems such as difficulty in handling silver/silver chloride electrodes. However, when the ozone concentration in the test solution containing ozone at a predetermined concentration is measured by linear sweep voltammetry (LSV) using the sensor described in Patent Document 1, there is a problem in that the ozone concentration measurement accuracy is low.

An objective of the present disclosure is to provide an electrochemical sensor that includes a diamond electrode as a working electrode and a diamond electrode as a reference electrode and is capable of measuring an ozone concentration in a test solution containing ozone at a predetermined concentration with high accuracy by linear sweep voltammetry.

MEANS FOR SOLVING PROBLEM

According to one aspect of the present disclosure, provided is an electrochemical sensor including:

a first diamond electrode as a working electrode; and
a second diamond electrode as a reference electrode,
wherein a current peak corresponding to an ozone concentration in a test solution is observed in a voltammogram obtained by linear sweep voltammetry measurement in which the first diamond electrode and the second diamond electrode are brought into contact with the test solution, the test solution containing ozone at a predetermined concentration.

According to another aspect of the present disclosure, provided is a method of manufacturing an electrochemical sensor, the method including:

arranging, on a support substrate, at least a first diamond electrode as a working electrode and a second diamond electrode as a reference electrode; and
performing a predetermined surface treatment on the first diamond electrode, wherein
performing the predetermined surface treatment involves

preparing a treatment solution containing ozone at a concentration of 10 ppm or more, and
in a state in which the first diamond electrode and the second diamond electrode are in contact with the treatment solution, sweeping a potential of the first diamond electrode against a potential of the second diamond electrode at a predetermined speed, and causing an electrochemical reaction on a surface of the first diamond electrode.

ADVANTAGE OF DISCLOSURE

According to the present disclosure, there can be provided: an electrochemical sensor including a diamond electrode as a working electrode and a diamond electrode as a reference electrode and capable of measuring an ozone concentration in a test solution containing ozone at a predetermined concentration with high accuracy by linear sweep voltammetry; a method of manufacturing the electrochemical sensor; and an electrochemical sensor system including the electrochemical sensor.

BRIEF DESCRIPTION OF THE DRAWINGS

FIG. 1 is a schematic perspective view of an electrochemical sensor according to an embodiment of the present disclosure.
FIG. 2 is a cross-sectional view of the electrochemical sensor illustrated in FIG. 1 taken along line A-A.
FIG. 3 is a schematic view of a vapor phase growth apparatus used when growing diamond crystals.
FIG. 4(a) is a cross-sectional view illustrating a state in which a concave groove is formed on a rear surface of a stack substrate including a conductive substrate and an electrode film, and FIG. 4(b) is a schematic view illustrating a state in which the stack substrate is fractured along the concave groove to obtain a diamond electrode.
FIG. 5 is a schematic diagram illustrating a schematic configuration of an electrochemical sensor system according to an embodiment of the present disclosure.
FIG. 6 is a block configuration diagram of a control unit according to an embodiment of the present disclosure.
FIG. 7 is a voltammogram obtained when LSV measurement was performed using the sensor of Sample 1.
FIG. 8 is a voltammogram obtained when LSV measurement was performed using the sensor of Sample 2.
FIG. 9 is a voltammogram obtained when LSV measurement was performed using the sensor of Sample 3.
FIG. 10 is a voltammogram obtained when LSV measurement was performed using the sensor of Sample 4.
FIG. 11 is a voltammogram obtained when LSV measurement was performed using the sensor of Sample 5.
FIG. 12 is a graph showing a voltammogram obtained when LSV measurement was performed using the sensor of Sample 6 and showing that a current peak corresponding to the ozone concentration in the test solution is observed.
FIG. 13 is a diagram showing a calibration curve prepared based on the peak value of the current of the voltammogram shown in FIG. 12.
FIG. 14 is a diagram showing a calibration curve prepared based on the peak value of the current obtained by performing LSV measurement using the sensors of Samples 7 to 10.
FIG. 15 is a voltammogram obtained when LSV measurement is performed using a conventional sensor in which a working electrode and a reference electrode are constituted of diamond electrodes not subjected to surface treatment of the present disclosure.

DETAILED DESCRIPTION

<Findings Obtained by Inventors>

Conventionally, it has been proposed to measure the concentration of ozone ($O_3$) in a test solution containing $O_3$ at a predetermined concentration by using an electrochemical sensor in which at least a working electrode and a reference electrode are constituted of chip-shaped diamond electrodes. A diamond electrode is an electrode including a conductive substrate and an electrode film formed on the conductive substrate and constituted of polycrystalline diamond. In the measurement of the $O_3$ concentration, first, a current value corresponding to the $O_3$ concentration is measured by performing linear sweep voltammetry (LSV) measurement using an electrochemical sensor, and the current value obtained by the LSV measurement is converted into the $O_3$ concentration using a calibration curve indicating a correlation between the current value and the $O_3$ concentration. Conventional electrochemical sensors in which both the working electrode and the reference electrode are diamond electrodes have a problem in that the $O_3$ concentration measurement accuracy is low.

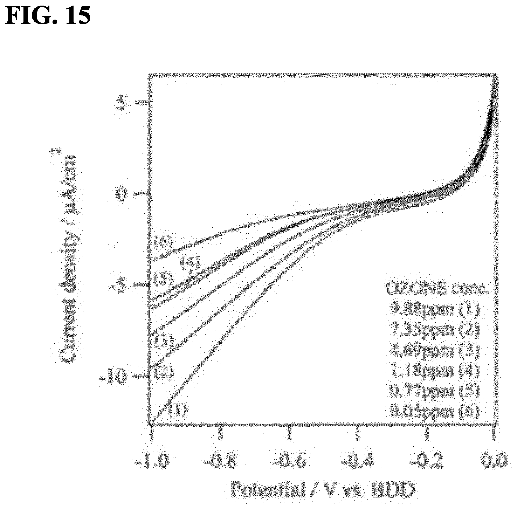

FIG. 15 shows an example of a voltammogram (potential-current curve) obtained when an LSV measurement is performed on a test solution containing $O_3$ at a predetermined concentration using a conventional electrochemical sensor in which a working electrode and a reference electrode are diamond electrodes. As shown in FIG. 15, when LSV measurement is performed using a conventional electrochemical sensor, a current peak cannot be observed in the obtained voltammogram.

With a conventional electrochemical sensor, since no current peak is observed in a voltammogram obtained by LSV measurement, a calibration curve is prepared as follows. First, a provisional reference potential is determined. Then, the working electrode and the reference electrode are brought into contact with a liquid having a known $O_3$ concentration (hereinafter, also referred to as a "standard liquid") in a state in which the liquid is stationary, and a value of a current flowing when a reference potential is applied between the working electrode and the reference electrode is measured. Likewise, for a plurality of standard solutions having different $O_3$ concentrations, the value of the current flowing when the reference potential is applied between the working electrode and the reference electrode in a state in which the working electrode and the reference electrode are in contact with the standard solution is measured. A calibration curve indicating the correlation between the current value and the $O_3$ concentration is prepared from the plurality of current values thus obtained.

With such a conventional electrochemical sensor, since no current peak is observed in a voltammogram obtained by LSV measurement, evaluation of the $O_3$ concentration using a calibration curve is performed as follows. In a state in which the working electrode and the reference electrode are in contact with the test solution having unknown $O_3$ concentration in a stationary state, the value of the current flowing when the same potential as the provisional reference potential determined at the time of preparing the calibration curve is applied between the working electrode and the reference electrode is measured. The measured current value is converted into the $O_3$ concentration using a calibration curve.

However, with such an electrochemical sensor, since the reference electrode is normally in an electrically floating state, the potential of the reference electrode is a floating potential. Therefore, the potential applied between the working electrode and the reference electrode may actually deviate (shift) from the reference potential in some cases. As a result, the current value used at the time of preparing the calibration curve or at the time of evaluating the $O_3$ concentration may not actually be the value of the current flowing when the reference potential is applied between the working electrode and the reference electrode, and a measurement error may occur in the current value. When a measurement error occurs in the current value during the evaluation of the $O_3$ concentration, an error occurs in the $O_3$ concentration obtained by the evaluation of the $O_3$ concentration using the calibration curve. When a measurement error occurs in the current value at the time of preparing the calibration curve, an accurate calibration curve cannot be prepared, and as a result, an error also occurs in the obtained $O_3$ concentration. In addition, when a measurement error occurs in the current value both at the time of evaluation of the $O_3$ concentration and at the time of preparation of the calibration curve, the error of the obtained $O_3$ concentration becomes large.

As described above, with a conventional electrochemical sensor in which the working electrode and the reference electrode are diamond electrodes, the obtained current value depends on the applied potential. However, since the potential of the reference electrode is a floating potential as described above, an error is likely to occur in the obtained $O_3$ concentration, and the $O_3$ concentration measurement accuracy is low.

The present inventors have conducted intensive studies on the above-described problems. As a result, the present inventors have found for the first time that, even with an electrochemical sensor in which a working electrode and a reference electrode are constituted of diamond electrodes, a current peak can be observed in a voltammogram obtained when an LSV measurement is performed on a test solution containing $O_3$ at a predetermined concentration using such an electrochemical sensor by performing a predetermined surface treatment on the working electrode. When the current peak is observed in the voltammogram obtained by the LSV measurement, the preparation of the calibration curve and the evaluation of the $O_3$ concentration can be performed based on the current peak, that is, the preparation of the calibration curve and the evaluation of the $O_3$ concentration can be performed without depending on the potential. As a result, the $O_3$ concentration can be measured with high accuracy even in an electrochemical sensor in which the working electrode and the reference electrode are diamond electrodes. This is a novel finding obtained by the present inventors.

The present disclosure has been made based on the above-described problems and findings obtained by the inventors.

<Embodiments of the Present Disclosure>

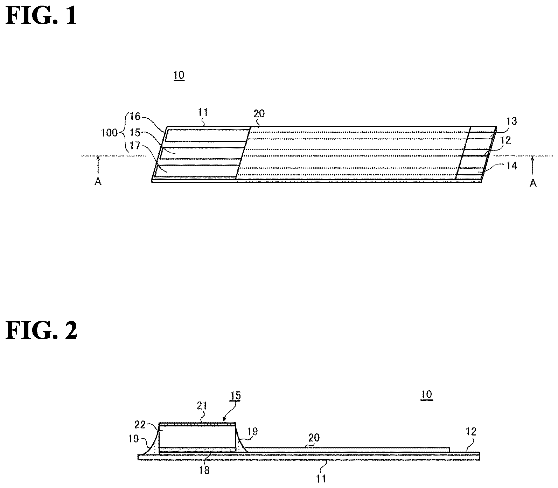

Hereinafter, as an embodiment of the present disclosure, there will be described, with reference to FIGS. 1 and 2, an electrochemical sensor that, by linear sweep voltammetry (LSV), measures an $O_3$ concentration in a test solution containing $O_3$ at a predetermined concentration (hereinafter, also simply referred to as a "test solution"), e.g., measures a dissolved ozone concentration in ozone water prepared using tap water as raw water.

(1) Electrochemical Sensor Configuration

As illustrated in FIGS. 1 and 2, an electrochemical sensor 10 (hereinafter also referred to as "sensor 10") according to the present embodiment includes a support substrate 11 (hereinafter also referred to as "substrate 11"). The substrate 11 is a substrate that supports a working electrode 15, a reference electrode 16, a counter electrode 17, and the like, described later. The substrate 11 is configured as a sheet-like (plate-like) member. The substrate 11 can be constituted of an insulating material such as a composite resin having an insulating property, ceramic, glass, or plastic. The substrate 11 is preferably constituted of, for example, a glass epoxy resin or polyethylene terephthalate (PET). In addition, the substrate 11 may be a semiconductor substrate or a metal substrate configured such that a surface on which the working electrode 15, the reference electrode 16, the counter electrode 17, and the like are to be provided has an insulating property. The planar shape of the substrate 11 may be, for example, a rectangular shape. The substrate 11 has a predetermined physical strength and mechanical strength, for example, strength that does not bend or break while measuring the $O_3$ concentration in the test solution.

Three wirings (electrical wirings) 12, 13, and 14 are disposed on one of two main surfaces of the substrate 11 (hereinafter also referred to as an "upper surface of the substrate 11") so as to be spaced apart from each other from one end toward the other end in the longitudinal direction of the substrate 11. Examples of material for forming the wirings 12 to 14 include various precious metals such as copper (Cu), gold (Au), platinum (Pt), silver (Ag), and palladium (Pd); various metals such as aluminum (Al), iron (Fe), nickel (Ni), chromium (Cr), and titanium (Ti); alloys mainly containing these precious metals or metals; oxides of the precious metals, metals, or alloys; and carbon. The wirings 12 to 14 may be formed using the same material or may be formed using different materials. The wirings 12 to 14 can be formed by a subtractive method, a semi-additive method, or the like. In addition, the wirings 12 to 14 can also be formed by a printing method such as screen printing, gravure printing, offset printing, or inkjet printing, a vapor deposition method, or the like.

The working electrode 15 is electrically connected to one end of the wiring 12 via a conductive bonding material 18 (see FIG. 2). A reference electrode 16 is electrically connected to one end of the wiring 13 via a conductive bonding material 18. A counter electrode 17 is electrically connected to one end of the wiring 14 via a conductive bonding material 18. As the bonding material 18, a conductive paste (conductive adhesive), a conductive tape, or the like can be used.

Each of the working electrode 15, the reference electrode 16, and the counter electrode 17 is constituted of a diamond electrode (hereinafter also referred to as a "BDD electrode"). The BDD electrode is a chip-shaped electrode (electrode chip) including an electrode film 21 constituted of a polycrystalline diamond film or the like and a conductive substrate 22 (hereinafter also referred to as "substrate 22"). The BDD electrode is configured as a vertical electrode that conducts electricity from the rear surface of the substrate 22. Here, the "rear surface of the substrate 22" is a surface opposite to the surface on which the electrode film 21 is provided, among the two main surfaces of the substrate 22. In the present specification, the BDD electrode as the working electrode 15 is also referred to as a first diamond electrode 15 (first BDD electrode 15), the BDD electrode as the reference electrode 16 is also referred to as a second diamond electrode 16 (second BDD electrode 16), and the BDD electrode as the counter electrode 17 is also referred to as a third diamond electrode 17 (third BDD electrode 17). The first BDD electrode 15, the second BDD electrode 16, and the third BDD electrode 17 may be collectively referred to as an electrode group 100. Details of the first BDD electrode 15, the second BDD electrode 16, and the third BDD electrode 17 will be described later.

The periphery of the junction between the first BDD electrode 15 and the wiring 12, the periphery of the junction between the second BDD electrode 16 and the wiring 13, and the periphery of the junction between the third BDD electrode 17 and the wiring 14 are each sealed with an insulating resin 19 (see FIG. 2). The insulating resin 19 can be constituted of a thermosetting resin or an ultraviolet curable resin. An epoxy-based insulating resin, a novolac-based insulating resin, or the like can be used as the thermosetting resin or the ultraviolet curable resin. The insulating resin 19 can be provided by, for example, applying a liquid insulating resin before curing (hereinafter, also referred to as "liquid resin") around each bonding material 18 and around each of the first BDD electrode 15, the second BDD electrode 16, and the third BDD electrode 17, and curing the liquid resin by heating or ultraviolet irradiation. The liquid resin is applied and cured after the first BDD electrode 15 is electrically connected to the wiring 12, the second BDD electrode 16 is electrically connected to the wiring 13, and the third BDD electrode 17 is electrically connected to the wiring 14. The liquid resin is applied so as to cover, for example, the bonding material 18, the side surface of the first BDD electrode 15, the side surface of the second BDD electrode 16, and the side surface of the third BDD electrode 17 without exposing them. In addition, the liquid resin is applied so as not to adhere to the surface of the first BDD electrode 15, the surface of the second BDD electrode 16, and the surface of the third BDD electrode 17. Note that "the surface of the first BDD electrode 15", "the surface of the second BDD electrode 16", and "the surface of the third BDD electrode 17" respectively mean the surfaces of the electrode films 21 of the respective electrodes, and specifically mean the surfaces opposite to the surface in contact with the substrate 22, among the two main surfaces of the electrode films 21. It can be said that "the surface of the first BDD electrode 15", "the surface of the second BDD electrode 16", and "the surface of the third BDD electrode 17" are surfaces (detection surfaces) that contribute to detection of $O_3$ in the test solution.

The wirings 12 to 14 are covered with a waterproof member 20 constituted of an insulating material or the like so that the test solution and so on do not come into contact with the wirings 12 to 14 when the electrode group 100 is in contact with the test solution or a treatment solution described later. The waterproof member 20 is configured to expose an end portion different from an end portion connected to each electrode among two end portions of each of the wirings 12 to 14.

As described above, in the sensor 10, each of the working electrode 15, the reference electrode 16, and the counter electrode 17 is constituted of the BDD electrode including the electrode film 21 and the conductive substrate 22.

The electrode film 21 is provided on one of the two main surfaces of the substrate 22. In the present specification, the main surface of the substrate 22 on which the electrode film 21 is provided is also referred to as a "crystal growth surface of the substrate 22". The electrode film 21 is provided over the entire crystal growth surface of the substrate 22. The electrode film 21 causes a predetermined electrochemical reaction (for example, an oxidation-reduction reaction of $O_3$) on the surface (exposed surface).

The electrode film 21 is constituted of polycrystalline diamond. Specifically, the electrode film 21 is a polycrystalline film (polycrystalline diamond film) constituted of diamond crystals containing a boron (B) element as a dopant, that is, diamond crystals having p-type conductivity. The diamond crystal is a crystal in which carbon (C) atoms are arranged in a pattern called a diamond crystal structure. The electrode film 21 may be a diamond-like carbon (DLC) film doped with B. The B concentration in the electrode film 21 can be measured by secondary ion mass spectrometry (SIMS), and can be, for example, $5 \times 10^{19}$ cm$^{-3}$ or more and $5 \times 10^{21}$ cm$^{-3}$ or less. SIMS is a method of measuring the concentration of a predetermined substance by detecting ions (secondary ions) generated when the surface of the electrode film 21 is irradiated with beam-shaped ions (primary ions) using a mass spectrometer.

The electrode film 21 can be grown (deposited or synthesized) by a chemical vapor deposition (CVD) method, a physical vapor deposition (PVD) method, or the like. Examples of the CVD method include a hot filament CVD method using a tungsten filament and a plasma CVD method, and examples of the PVD method include an ion beam method and an ionization vapor deposition method. The thickness of the electrode film 21 can be, for example, 0.5 $\mu$m or more and 10 $\mu$m or less, preferably 1 $\mu$m or more and 6 $\mu$m or less, and more preferably 2 $\mu$m or more and 4 $\mu$m or less.

As the conductive substrate 22, a flat plate-shaped substrate constituted of a low-resistance material is used. As the substrate 22, a substrate constituted of silicon (Si) as a main element and containing a p-type dopant such as boron (B) at a predetermined concentration, for example, a p-type single crystal Si substrate can be used. A p-type polycrystalline Si substrate can also be used as the substrate 22. The B concentration in the substrate 22 can be, for example, $5 \times 10^{18}$ cm$^{-3}$ or more and $1.5 \times 10^{20}$ cm$^{-3}$ or less, and preferably $5 \times 10^{18}$ cm$^{-3}$ or more and $1.2 \times 10^{20}$ cm$^{-3}$ or less. When the B concentration in the substrate 22 is within the above-described range, the specific resistance of the substrate 22 can be reduced and a decrease in the manufacturing yield of the substrate 22 and degradation in performance can be avoided.

The thickness of the substrate 22 may be, for example, 350 $\mu$m or more. As a result, a commercially available single crystal Si substrate having a diameter of 6 inches or 8 inches can be used as it is as the substrate 22 without back-lapping and adjusting the thickness. As a result, the productivity of the BDD electrode can be increased, and manufacturing cost can be reduced. The upper limit of the thickness of the substrate 22 is not particularly limited, but the thickness of the Si substrate currently generally distributed on the market is about 775 $\mu$m in the case of a single crystal Si substrate having a diameter of 12 inches. Therefore, the upper limit of the thickness of the substrate 22 in the current technology can be, for example, about 775 $\mu$m.

As the substrate 22, a substrate other than a substrate (Si substrate) constituted from Si as a main element may be used. For example, a substrate constituted of a compound of Si such as a silicon carbide substrate (SiC substrate) may also be used as the substrate 22.

It is also conceivable that a metal substrate constituted of niobium (Nb), molybdenum (Mo), titanium (Ti), or the like as a main element is used as the substrate 22. However, when a metal substrate is used, leakage current is likely to occur, and thus it is preferable to use a Si substrate or a substrate constituted of a compound of Si as the substrate 22.

The outer shapes (planar shapes) of the first BDD electrode 15, the second BDD electrode 16, and the third BDD electrode 17 are each formed in a rectangular shape, for example, a rectangular shape when the electrodes are viewed from above in the vertical direction with respect to the main surface of the substrate 22. The first BDD electrode 15, the second BDD electrode 16, and the third BDD electrode 17 may be formed in the same planar shape, or may be formed in different planar shapes.

The planar area of the first BDD electrode 15 is, for example, 1 mm$^2$ or more and 100 mm$^2$ or less. Note that the planar area of the first BDD electrode 15 is an area of the first BDD electrode 15 when the first BDD electrode 15 is viewed from above in the vertical direction with respect to the main surface of the substrate 22. As described above, since the electrode film 21 is provided over the entire crystal growth surface of the substrate 22, the planar area of the first BDD electrode 15 is the planar area of the electrode film 21 of the first BDD electrode 15, that is, the area of the surface contributing to the detection of $O_3$ in the test solution.

When the planar area of the first BDD electrode 15 is 1 mm$^2$ or more, the first BDD electrode 15 can be easily and stably fabricated with high accuracy by a method using fracture described later. In addition, a decrease in handling property and a decrease in mounting stability of the first BDD electrode 15 can be suppressed. Further, the current peak (peak of the reduction current of $O_3$) can be observed in the voltammogram obtained when a LSV measurement described later is performed, and the sensor 10 having the sensitivity necessary for measuring the $O_3$ concentration with high accuracy can be obtained. In addition, the current flowing at the time of LSV measurement can be prevented from becoming excessively small, and as a result, a decrease in a S/N ratio (= ratio of current (signal current) flowing through the working electrode 15 / noise current) can be prevented. When the planar area of the first BDD electrode 15 is less than 1 $mm^2$, it is difficult to stably fabricate the first BDD electrode 15 with high accuracy by the method using fracture described later.

In addition, when the planar area of the first BDD electrode 15 is 100 $mm^2$ or less, an increase in size of the sensor 10 including the first BDD electrode 15 can be avoided, that is, it is easy to obtain a small-sized sensor 10. When the planar area of the first BDD electrode 15 exceeds 100 $mm^2$, it is unavoidable to increase the size of the sensor 10, and it is difficult to obtain a small-sized sensor 10.

The planar area of the second BDD electrode 16 and the planar area of the third BDD electrode 17 are not particularly limited, but are each, for example, 1 $mm^2$ or more and 100 $mm^2$ or less. The planar area of the second BDD electrode 16 is an area of the second BDD electrode 16 when the second BDD electrode 16 is viewed from above in the vertical direction with respect to the main surface of the substrate 22, and the planar area of the third BDD electrode 17 is an area of the third BDD electrode 17 when the third BDD electrode 17 is viewed from above in the vertical direction with respect to the main surface of the substrate 22.

When the planar area of each of the second BDD electrode 16 and the third BDD electrode 17 is 1 $mm^2$ or more, the second BDD electrode 16 and the third BDD electrode 17 can be easily and stably fabricated with high accuracy by the method using fracture described later. In addition, a decrease in handling properties and a decrease in mounting stability of the second BDD electrode 16 and the third BDD electrode 17 can be suppressed. When the planar area of each of the second BDD electrode 16 and the third BDD electrode 17 is 100 $mm^2$ or less, an increase in the size of the sensor 10 can be avoided, that is, a small-sized sensor 10 can be easily obtained.

The first BDD electrode 15, the second BDD electrode 16, and the third BDD electrode 17 may have the same planar area, or may have different planar areas within the above-described range of planar areas. In the present embodiment, an example in which the first BDD electrode 15, the second BDD electrode 16, and the third BDD electrode 17 have the same planar area is described.

As described later, the first BDD electrode 15 is subjected to a predetermined surface treatment. Specifically, in a state in which the electrode group 100 (that is, the first BDD electrode 15, the second BDD electrode 16, and the third BDD electrode 17) is in contact with a treatment solution containing $O_3$ at a concentration of 10 ppm or more, the potential of the first BDD electrode 15 is swept at a predetermined speed against the potential of the second BDD electrode 16 to cause a predetermined electrochemical reaction on the surface (detection surface) of the first BDD electrode 15.

As a result of the predetermined surface treatment being performed on the first BDD electrode 15, the voltammogram obtained by the LSV measurement using the sensor 10, that is, the LSV measurement performed by bringing the electrode group 100 into contact with the test solution has a current peak corresponding to the $O_3$ concentration in the test solution. For example, when the LSV measurement is performed in which the potential of the first BDD electrode 15 is swept in one direction (positive direction or negative direction) at a rate of 0.1 V/sec against the potential of the second BDD electrode 16 in a state in which the electrode group 100 is in contact with the test solution, peak of current (reaction current, reduction current of $O_3$) corresponding to the concentration of $O_3$ in the test solution is observed in the obtained voltammogram. The peak value of the current observed in the above-described voltammogram varies depending on the concentration of $O_3$ in the test solution.

The LSV measurement is performed in a state in which the electrode group 100 is in contact with the test solution being in a stationary state. In the present specification, a "stationary state of the test solution" refers to "a state in which the degree of electrochemical reaction caused on the surface of the first BDD electrode 15 is substantially governed by the amount of $O_3$ diffused in the test solution and reaching the surface of the electrode group 100". When the LSV measurement is started under the stationary state of the test solution, $O_3$ present around the electrode group 100 is gradually consumed as the electrochemical reaction progresses, and eventually depleted. Therefore, the amount of current generated by the electrochemical reaction gradually decreases with time after the start of the LSV measurement, and as a result, a predetermined peak appears in the plot of the current value. Therefore, the "stationary state of the test solution" in the present specification can be also rephrased as "a state in which when the LSV measurement is performed under a predetermined condition and the current value of the electrochemical reaction caused on the surface of the first BDD electrode 15 is plotted, a predetermined peak indicated in the examples and the like appears". When the LSV measurement is started in a state in which the test solution is not stationary (a state in which the test solution is flowing), $O_3$ is newly replenished to the periphery of the electrode group 100 due to the replacement of the test solution around the electrode group 100, and the current value does not decrease and a predetermined peak does not appear even when the value is plotted.

Further, in the present specification, the "voltammogram obtained by LSV measurement using the sensor 10" is also simply referred to as a "voltammogram of the sensor 10", and the "current peak corresponding to the $O_3$ concentration in the test solution" is also simply referred to as a "current peak". In addition, in the present specification, "a voltammogram has a peak" and "a peak is observed in a voltammogram" mean that a peak protruding in a convex shape toward either the positive side or the negative side exists in the voltammogram. In the voltammogram of the sensor 10, for example, a peak protruding in a convex shape toward the negative side is observed. In addition, in the voltammogram obtained when LSV measurement is performed in which the potential of the first BDD electrode 15 is swept at a predetermined rate (for example, 0.1 V/sec) against the potential of the second BDD electrode 16 in a state in which the electrode group 100 is in contact with the test solution being in a stationary state, that is, in the voltammogram of the sensor 10, a current peak is observed within a potential range of, for example, -0.3 V to -0.9 V (vs. the second BDD electrode 16).

In the LSV measurement using the sensor 10, a calibration curve is prepared as follows. First, a test solution (standard solution) having a known $O_3$ concentration is prepared, and LSV measurement is performed in which the potential of the first BDD electrode 15 is swept at a predetermined speed against the potential of the second BDD electrode 16 in a state in which the electrode group 100 is in contact with the standard solution, and the current peak value is measured. The LSV measurement in a similar manner is performed on a plurality of standard solutions having different $O_3$ concentrations, and the current peak value is measured. Then, a calibration curve indicating a correlation between the current peak value and the $O_3$ concentration is prepared from the plurality of obtained current peak values. Since a current peak is observed in the voltammogram of the sensor 10, a calibration curve can be prepared based on the measured current peak value. That is, the calibration curve can be prepared without depending on the potential. Accordingly, even when the potential of the second BDD electrode 16, which is the floating potential, fluctuates, an accurate calibration curve can be prepared, and as a result, an error is less likely to occur in the obtained $O_3$ concentration. The present inventors have confirmed that the current peak value obtained by LSV measurement using the sensor 10 indicates a certain correlation with the $O_3$ concentration in the test solution.

In the LSV measurement using the sensor 10, the $O_3$ concentration is evaluated as follows. First, LSV measurement is performed in which the potential of the first BDD electrode 15 is swept at a predetermined speed against the potential of the second BDD electrode 16 in a state in which the electrode group 100 is in contact with a test solution having an unknown $O_3$ concentration, and a current peak value is measured. Then, the measured current peak value is converted into the $O_3$ concentration using a calibration curve. Since a current peak is observed in the voltammogram of the sensor 10, the $O_3$ concentration can be evaluated using a calibration curve based on the measured current peak value. That is, the evaluation of the $O_3$ concentration using the calibration curve can be performed without depending on the potential. As a result, even when the potential of the second BDD electrode 16, which is the floating potential, fluctuates, an error is less likely to occur in the obtained $O_3$ concentration.

Here, in the evaluation of the $O_3$ concentration, it is important to perform the LSV measurement under the same conditions as the LSV measurement conditions at the time of preparing the calibration curve as much as possible. That is, it is desirable that the sensor 10 used for the evaluation of the $O_3$ concentration is the same as the sensor 10 used for the preparation of the calibration curve. Even when different sensors 10 are used at the time of evaluation of the $O_3$ concentration and at the time of preparation of the calibration curve, it is desirable to make the specifications of the electrode group 100 as uniform as possible, for example, to use electrodes from the same manufacturing lot if possible between the first BDD electrodes 15, between the second BDD electrodes 16, and between the third BDD electrodes 17, and it is desirable to make the conditions such as the amount and temperature of the test solution, the arrangement of the sensors 10 during measurement, and the sweep speed at the time of measurement as uniform as possible. Thus, the measurement error of the $O_3$ concentration can be reliably reduced.

Further, as described above, by preparing the calibration curve and evaluating the $O_3$ concentration using the calibration curve based on the current peak value obtained by the LSV measurement, an error is less likely to occur in the obtained $O_3$ concentration even when the potential of the second BDD electrode 16 deviates between the time of preparing the calibration curve and the time of evaluating the $O_3$ concentration.

As described above, since the current peak is observed in the voltammogram of the sensor 10, the calibration curve can be prepared and the $O_3$ concentration can be evaluated based on the measured current peak value. That is, according to the sensor 10, the calibration curve can be prepared and the $O_3$ concentration can be evaluated without depending on the potential. As a result, even when the potential of the second BDD electrode 16, which is the floating potential, fluctuates, an error is less likely to occur in the obtained $O_3$ concentration. That is, even with the sensor 10 in which the working electrode 15 and the reference electrode 16 are constituted of BDD electrodes, the $O_3$ concentration in the test solution can be measured with high accuracy by LSV measurement using the sensor 10.

In addition, since the predetermined surface treatment is performed on the first BDD electrode 15, the sensor 10 can have high sensitivity, for example, saturation sensitivity (that is, maximum sensitivity of the sensor 10). The saturation sensitivity of the sensor 10 is determined by the crystal characteristics such as the crystal grain size and orientation of the BDD crystal constituting the electrode film 21 of each electrode included in the sensor 10, the doping amount of the dopant in the electrode film 21, the electrode size, the specification of the sensor 10 (for example, the arrangement of each electrode), and the like, and is different for each sensor 10. The sensitivity (saturation sensitivity) of the sensor 10 is, for example, 2 $\mu$A/(cm$^2$·ppm) or more.

Here, the "sensitivity of the sensor 10" is an absolute value of a value (= current peak value / (planar area of the first BDD electrode 15 $\times$ $O_3$ concentration)) obtained by dividing a current peak value obtained by performing a predetermined LSV measurement using the sensor 10 by the planar area of the first BDD electrode 15 and the $O_3$ concentration in the test solution. Further, the "predetermined LSV measurement" referred to here is exemplified by an LSV measurement performed by sweeping the potential of the first BDD electrode 15 at a rate of 0.1 V/sec against the potential of the second BDD electrode 16 in a state in which the electrode group 100 is in contact with a test solution containing $O_3$ at a concentration of 0.1 ppm or more.

When the sensitivity of the sensor 10 is 2 $\mu$A/(cm$^2\cdot$ppm) or more, the current peak can be easily observed in the voltammogram of the sensor 10, and the measurement error of the current peak value can be reduced. That is, when the sensitivity of the sensor 10 is 2 $\mu$A/(cm$^2\cdot$ppm) or more, it can be said that the sensor 10 has a sensitivity necessary and sufficient for measuring the $O_3$ concentration with high accuracy. In addition, when the sensitivity of the sensor 10 is 2 $\mu$A/(cm$^2\cdot$ppm) or more, it is not necessary to form a special electric circuit for detecting a minute current in the fabricating process of the sensor 10. As a result, the sensor 10 can be easily fabricated, the configuration of the sensor 10 can be simplified, and the small-sized sensor 10 can be easily obtained.

It is desirable that the sensitivity of the sensor 10 is high. That is, it is desirable that the sensitivity value of the sensor 10 is large. As described above, the sensitivity of the obtained sensor 10 varies depending on the crystal characteristics such as the crystal grain size and orientation of the BDD crystal constituting the electrode film 21 and the doping amount of the dopant, the electrode size, the arrangement of each electrode, and the like. As described above, when the sensitivity of the sensor 10 is at least 2 $\mu$A/(cm$^2\cdot$ppm) or more, the current peak can be observed in the voltammogram. Therefore, it is only necessary that the sensitivity of the sensor 10 be equal to or higher than a certain level, and it is important that a predetermined surface treatment is performed on the first BDD electrode 15 so as to obtain saturation sensitivity in the sensor 10 to be used. The upper limit of the sensitivity of the sensor 10 is empirically about 8 $\mu$A/(cm$^2\cdot$ppm).

In addition, as a result of the sensor 10 having high sensitivity, for example, as a result of the sensitivity of the sensor 10 being 2 $\mu$A/(cm$^2\cdot$ppm) or more, a current peak can be observed in the voltammogram of the sensor 10 and the $O_3$ concentration can be measured with high accuracy even when the test solution has a low $O_3$ concentration. For example, according to the sensor 10, when the $O_3$ concentration in the test solution is at least 1.0 ppm or more, preferably at least 0.5 ppm or more, more preferably at least 0.3 ppm or more, and even more preferably at least 0.1 ppm or more, a current peak can be observed in a voltammogram obtained by performing LSV measurement, and the $O_3$ concentration can be measured with high accuracy.

Further, as described later, the sensitivity of the sensor 10 can be maintained (in a saturated state) for a long time by performing a predetermined surface treatment on the first BDD electrode 15 and then additionally performing the same treatment over a plurality of times until the sensitivity of the sensor 10 reaches the saturation sensitivity. That is, in this way, the sensor 10 has stable sensitivity. The expression "the sensor 10 has stable sensitivity" means that the variation in sensitivity of the sensor 10 is small. For example, in the sensor 10, the variation in sensitivity is 30 % or less, preferably 20 % or less.

Here, the "variation in sensitivity" is a value calculated by the following procedure. First, the LSV measurement is performed n times (n: 2 to 10 (times)) using the sensor 10 under the condition that the $O_3$ concentration in the test solution is the same, and the current peak value is acquired. The sensitivity (S1, S2,..., Sn) of the sensor 10 is calculated using the acquired current peak value, and the average value S(ave) of the calculated sensitivity of the sensor 10 is calculated. Then, the variation in sensitivity of the sensor 10 is calculated from the following (Equation 1). In the following (Equation 1), S(max) is the calculated maximum value of the sensitivity of the sensor 10, and S(min) is the calculated minimum value of the sensitivity of the sensor 10.

$$\text{(Equation 1)}$$

$$\text{Sensor sensitivity variation (\%)} = \{(S(max)\text{-}S(min))/S(ave)\} \times 100$$

As a result of the sensor 10 having a stable sensitivity, for example, the variation in sensitivity of the sensor 10 being 30 % or less, an error is less likely to occur in the obtained $O_3$ concentration even when the $O_3$ concentration is repeatedly measured using the sensor 10. That is, even when the sensor 10 is used a plurality of times, the $O_3$ concentration in the test solution can be measured with high accuracy.

The sensor 10 preferably has both the above-described high sensitivity and the above-described stable sensitivity. As a result, even when the sensor 10 is used a plurality of times, the $O_3$ concentration in the test solution can be reliably measured with high accuracy.

(2) Method of manufacturing electrochemical sensor

Next, a method of manufacturing the above-described electrochemical sensor 10 will be described.

[Fabrication of BDD Electrodes]

First, a first BDD electrode 15 (working electrode 15), a second BDD electrode 16 (reference electrode 16), and a third BDD electrode 17 (counter electrode 17) are fabricated.

First, as the conductive substrate 22, for example, a flat plate-shaped single crystal Si substrate having a circular outer shape in a plan view is prepared. Then, among the two main surfaces of the substrate 22, a surface on which diamond crystals are to be grown (deposited) (i.e., a crystal growth surface of the substrate 22) is subjected in the atmosphere to a scratch treatment of increasing the density of nucleation of diamond. The scratch treatment is a treatment of applying processing damage to the crystal growth surface, for example, a treatment of applying scratch marks (scratches) to the crystal growth surface using diamond abrasive grains (diamond powder) or the like of about several $\mu$m. Instead of or in addition to the scratch treatment, seeding treatment may be performed. The seeding treatment is, for example, a treatment of adhering the diamond particles (species) to the crystal growth surface by applying a solution (dispersion) in which diamond particles (preferably, diamond nanoparticles) of about several nm to several ten $\mu$m are dispersed to the crystal growth surface, or by immersing the substrate 22 in the dispersion.

When the scratch treatment or the seeding treatment is completed, polycrystalline diamond is grown (deposited) on the crystal growth surface of the substrate 22 by, for example, a hot filament CVD method using tungsten filament to form the electrode film 21.

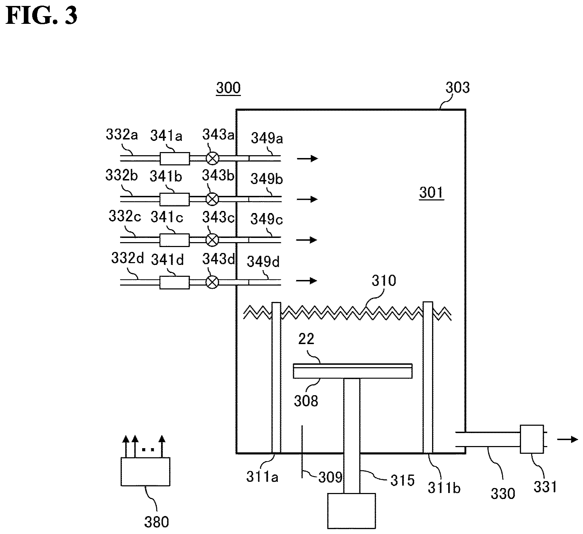

Diamond crystals can be grown using, for example, a hot filament CVD apparatus 300 as illustrated in FIG. 3. The hot filament CVD apparatus 300 includes an airtight container 303 constituted of a heat-resistant material such as quartz and having a growth chamber 301 inside. A susceptor 308 that holds the substrate 22 is provided in the growth chamber 301.

Gas supply pipes 332a to 332d are connected to a side wall of the airtight container 303. The gas supply pipes 332a to 332d are respectively provided with flow rate controllers 341a to 341d and valves 343a to 343d in order from the upstream side of the gas flow. Nozzles 349a to 349d that suppl the gases supplied from the gas supply pipes 332a to 332d into the growth chamber 301 are connected to downstream ends of the gas supply pipes 332a to 332d, respectively. Nitrogen ($N_2$) gas is supplied from the gas supply pipe 332a into the growth chamber 301 through the nozzle 349a. Hydrogen ($H_2$) gas is supplied from the gas supply pipe 332b into the growth chamber 301 through the nozzle 349b. A B-containing gas is supplied from the gas supply pipe 332c into the growth chamber 301 through the nozzle 349c. Examples of the B-containing gas include trimethyl boron ($B(CH_3)_3$, abbreviated as TMB) gas and diborane ($B_2H_6$) gas. A C-containing gas is supplied from the gas supply pipe 332d into the growth chamber 301 through the nozzle 349d. Examples of the C-containing gas include methane ($CH_4$) gas and ethane ($C_2H_6$) gas. Another side wall of the airtight container 303 is provided with an exhaust pipe 330 that exhausts the inside of the growth chamber 301. The exhaust pipe 330 is provided with a pump 331. A temperature sensor 309 that measures the temperature in the growth chamber 301 is provided in the airtight container 303. In addition, a tungsten filament 310 and a pair of electrodes (for example, molybdenum (Mo) electrodes) 311a and 311b that hold the tungsten filament 310 and are connected to a power source (not illustrated) are provided in the airtight container 303. Each member included in the hot filament CVD apparatus 300 is connected to a controller 380 configured as a computer, and a processing procedure and processing conditions described later are controlled by a program executed on the controller 380.

First, the substrate 22 is loaded into the growth chamber 301 (airtight container 303) configured to be capable of receiving the supply of various gases including a B-containing gas and a C-containing gas, and held on the susceptor 308. Subsequently, a current is passed between the electrodes 311a and 311b to start heating the tungsten filament 310. When the tungsten filament 310 is heated, the substrate 22 held on the susceptor 308 is also heated. While exhausting the inside of the growth chamber 301, supplies of $H_2$ gas, B-containing gas (e.g., TMB gas), and C-containing gas (e.g., $CH_4$ gas) into the growth chamber 301 are started. At this time, $N_2$ gas may be supplied into the growth chamber 301 as necessary. Heating of the tungsten filament 310, that is, heating of the substrate 22, exhausting of the inside of the growth chamber 301, and supplying of various gases into the growth chamber 301 are continued at least until the growth of the diamond crystal is completed.

When the temperature of the substrate 22 reaches a predetermined temperature (growth temperature of diamond crystal), the B-containing gas and the C-containing gas are decomposed (thermally decomposed), and predetermined active species are generated. When a predetermined active species is supplied onto the crystal growth surface of the substrate 22, diamond crystals (polycrystalline diamond) containing element B grow on the substrate 22. When the temperature of the substrate 22 reaches the growth temperature of the diamond crystal, the temperature of the tungsten filament 310 is controlled so that the temperature of the substrate 22 is maintained at the growth temperature of the diamond crystal.

The following conditions are exemplified as the conditions for growing the diamond crystal.

Pressure in growth chamber: 5 Torr or more and 50 Torr or less (665 Pa or more and 6650 Pa or less), preferably 10 Torr or more and 35 Torr or less (1330 Pa or more and 4655 Pa or less)

Ratio of supply amount of B-containing gas to supply amount of C-containing gas (B-containing gas/C-containing gas): 0.003 % or more and 0.8 % or less

Growth Temperature: 600 °C or more and 1000 °C or less, preferably 650 °C or more and 800 °C or less

Filament Temperature: 1800 °C or more and 2500 °C or less, preferably 2000 °C or more and 2200 °C or less

Growth Time: 200 minutes or more and 500 minutes or less, preferably 300 minutes or more and 500 minutes or less

Ratio of supply amount of C-containing gas to supply amount of $H_2$ gas (C-containing gas/$H_2$ gas): 2 % or more and 5 % or less.

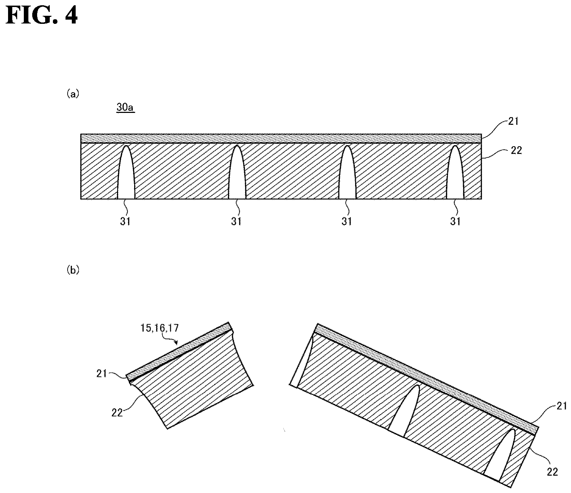

By growing diamond crystals under the above-described conditions, a stack substrate 30a (see FIG. 4(a)) in which an electrode film 21 constituted of polycrystalline diamond is stacked on the substrate 22 can be obtained.

After the growth of the diamond crystal is completed, the supply of each gas into the growth chamber 301 and the heating of the tungsten filament 310 are stopped. Then, when the temperature in the growth chamber 301 is lowered to a predetermined temperature, the stack substrate 30a is unloaded from the growth chamber 301 to the outside of the airtight container 303.

Subsequently, the stack substrate 30a is divided in predetermined shapes (for example, chip shapes), and a BDD electrode including the electrode film 21 and the substrate 22 is fabricated. Specifically, first, as illustrated in FIG. 4(a), a concave groove 31 (for example, a laser processed groove, a scribe groove, or a dicing groove) is formed from the rear surface of the stack substrate 30a, that is, the rear surface of the substrate 22. Note that the "rear surface of the substrate 22" is a surface opposite to the surface on which the electrode film 21 is provided among the two main surfaces of the substrate 22. The grooves 31 can be formed by using a known method such as a laser processing method like laser scribing or laser dicing, a mechanical processing method, or etching.

As an example of the irradiation condition of the laser beam when the groove 31 is formed by the laser processing method, the following conditions can be given.

Laser light: 532 nm, 5 W, 10 kHz, spot diameter 2 $\mu$m

Scanning speed: 5 mm/sec or more and 20 mm/sec or less, preferably 7 mm/sec or more and 15 mm/sec or less.

Number of scans: 3 times or more and 10 times or less

When the groove 31 is formed, the depth of the groove 31 is adjusted so as not to penetrate the substrate 22 in the thickness direction, that is, so as not to reach the electrode film 21. The depth of the groove 31 can be adjusted by, for example, adjusting the number of times of scanning with laser light (the number of times of laser light irradiation). When the groove 31 is formed, the depth of the groove 31 is preferably adjusted so that the thickness of the thinnest portion of the substrate 22 is, for example, 10 $\mu$m or more. Accordingly, alteration of the electrode film 21 can be suppressed, and as a result, a decrease in sensitivity of the sensor 10 can be avoided. Here, the "thickness of the thinnest portion of the substrate 22" means the thickness of the thinnest portion of the substrate 22 after the groove 31 is formed. In addition, the term "alteration of the electrode film 21" as used herein means that in the electrode film 21, the bonding form of carbon atoms is not an $sp^3$ bonding structure (diamond structure) but an $sp^2$ bonding structure (graphite structure).

In addition, the planar area of the obtained BDD electrode can be adjusted by adjusting the formation pattern of the groove 31. Therefore, when the groove 31 is formed, the formation pattern of the groove 31 is a pattern in which the planar area of the obtained BDD electrode becomes the above-described predetermined planar area.

Subsequently, as illustrated in FIG. 4(b), the stack substrate 30a is bent along the groove 31 in a direction in which the electrode film 21 is bent outward, and the substrate 22 is fractured. Thus, the stack substrate 30a is divided into a plurality of small pieces. Then, the small piece becomes a BDD electrode including the electrode film 21 and the substrate 22. Thereafter, the small piece of the obtained stack substrate 30a, that is, the BDD electrode may be cleaned as necessary.

It is conceivable to form the groove 31 from the surface (the electrode film 21 side) of the stack substrate 30a. However, since the electrode film 21 constituted of polycrystalline diamond has high hardness, it is difficult to form the grooves 31 from the surface of the stack substrate 30a by a laser processing method, a mechanical processing method, or the like.

Further, a method of dividing the stack substrate 30a by forming the electrode film 21 and the substrate 22 into a predetermined shape by dry etching or the like on the stack substrate 30a may be considered. However, it is very difficult to divide the stack substrate 30a provided with the high hardness electrode film 21 constituted of polycrystalline diamond into a predetermined shape by dry etching or the like. In addition, an altered region may be generated in the electrode film 21 by dry etching.

[Fabrication of Electrochemical Sensors]

The sensor 10 is fabricated using the obtained BDD electrode.

First, the support substrate 11 is prepared. Then, wirings 12 to 14 of a predetermined pattern are provided on the substrate 11. The substrate 11 provided with the wirings 12 to 14 in advance may be prepared. A conductive bonding material 18 is provided at one end of the wiring 12 so as to be electrically connected to the wiring 12, and the first BDD electrode 15 is disposed on the bonding material 18. A conductive bonding material 18 is provided at one end of the wiring 13 so as to be electrically connected to the wiring 13, and the second BDD electrode 16 is disposed on the bonding material 18. A conductive bonding material 18 is provided at one end of the wiring 14 so as to be electrically connected to the wiring 14, and the third BDD electrode 17 is disposed on the bonding material 18. When the first BDD electrode 15, the second BDD electrode 16, and the third BDD electrode 17 are disposed, the respective electrodes are disposed such that the electrode film 21 faces upward (that is, the conductive substrate 22 faces the support substrate 11). Accordingly, the first BDD electrode 15, the second BDD electrode 16, and the third BDD electrode 17 are fixed on the substrate 11 via the bonding material 18, and are electrically connected to the wirings 12 to 14, respectively.

Then, the liquid resin is applied around the junction between the first BDD electrode 15 and the wiring 12, around the junction between the second BDD electrode 16 and the wiring 13, and around the junction between the third BDD electrode 17 and the wiring 14, respectively. For example, the liquid resin is applied so as to cover the bonding materials 18, the side surfaces of the first BDD electrode 15, the side surfaces of the second BDD electrode 16, and the side surfaces of the third BDD electrode 17 without leaving them exposed. In addition, the liquid resin is applied so as not to adhere to the surface of the first BDD electrode 15, the surface of the second BDD electrode 16, and the surface of the third BDD electrode 17. Thereafter, the liquid resin is cured by heating or ultraviolet irradiation. Accordingly, the side surfaces of the first BDD electrode 15, the second BDD electrode 16, and the third BDD electrode 17 are sealed with the insulating resin 19.

Then, the wirings 12 to 14 are covered with the waterproof member 20. Thus, the sensor 10 as illustrated in FIGS. 1 and 2 is obtained.

Subsequently, a predetermined surface treatment is performed on the first BDD electrode 15. This surface treatment can also be considered as a pretreatment of the measurement of the $O_3$ concentration in the test solution by LSV measurement using the sensor 10.

The surface treatment in the present embodiment involves:

preparing a treatment solution containing $O_3$ at a concentration of 10 ppm or more (Step A); and
in a state in which the electrode group 100 (that is, the first BDD electrode 15, the second BDD electrode 16, and the third BDD electrode 17) is in contact with a treatment solution containing $O_3$ at a concentration of 10 ppm or more, sweeping a potential of the first BDD electrode 15 against a potential of the second BDD electrode 16 at a predetermined speed to cause a predetermined electrochemical reaction on the surface of the first BDD electrode 15 (Step B).

<Step A>

A treatment solution (ozone water) containing $O_3$ at a concentration of 10 ppm or more is prepared. The upper limit of the $O_3$ concentration in the treatment solution is not particularly limited, but may be, for example, about 30 ppm or less. When the treatment solution containing $O_3$ at a concentration exceeding 30 ppm is used, members around the first BDD electrode 15, the second BDD electrode 16, and the third BDD electrode 17 are likely to be oxidized when the electrode group 100 is in contact with the treatment solution in Step B described later. In addition, a predetermined current may be generated when the peripheral member is oxidized in some cases. When the current caused by the oxidation interferes with the current caused by the electrochemical reaction in Step B described later, an error may occur in the maximum energization current value at the time of potential sweeping described later. As a result, the surface treatment on the first BDD electrode 15 may be insufficient.

<Step B>

When Step A ends, Step B is performed. That is, in a state in which the electrode group 100 is in contact with the treatment solution containing $O_3$ at a concentration of 10 ppm or more, the potential of the first BDD electrode 15 is swept at a predetermined speed against the potential of the second BDD electrode 16 to cause an electrochemical reaction (for example, a reduction reaction of $O_3$) on the surface of the first BDD electrode 15. Accordingly, the surface (detection surface) of the first BDD electrode 15 can be modified to a surface suitable for measuring the $O_3$ concentration (detecting $O_3$). As a result, even with the sensor 10 in which the working electrode 15 and the reference electrode 16 are constituted of BDD electrodes, a current peak can be observed in the voltammogram of the sensor 10. This is a novel finding obtained by the present inventors for the first time.

When the $O_3$ concentration in the treatment solution is less than 10 ppm, the surface of the first BDD electrode 15 is not sufficiently modified to a surface suitable for measuring the $O_3$ concentration even when Step B is performed. As a result, a current peak may not be observed in the voltammogram of the sensor 10.

Step B is performed in a state in which the treatment solution is flowing over the surface of the first BDD electrode 15. In the present specification, the "flowing state of the treatment solution" refers to a state in which $O_3$ is newly replenished to the periphery of the electrode group 100 by replacing the treatment solution around the electrode group 100. Therefore, the "flowing state of the treatment solution" in the present specification can be also rephrased to be "a state in which when the LSV measurement is performed under a predetermined condition and the current value of the electrochemical reaction caused on the surface of the first BDD electrode 15 is plotted, a predetermined peak indicated in the examples and the like does not appear".

For example, Step B is performed while stirring the treatment solution so that the $O_3$ concentration around the electrode group 100 is maintained at 10 ppm or more in a state in which the electrode group 100 is in contact with (immersed in) a sufficient amount of the treatment solution contained in the container. Further, for example, Step B may be performed while continuously replenishing (supplying) ozone water of a predetermined concentration into the container so that the $O_3$ concentration around the electrode group 100 is maintained at 10 ppm or more in a state in which the electrode group 100 is in contact with the treatment solution in the container. Further, for example, Step B may be performed while continuously generating $O_3$ in the container using a known ozone generator so that the $O_3$ concentration around the electrode group 100 is maintained at 10 ppm or more in a state in which the electrode group 100 is in contact with the treatment solution in the container. Further, for example, Step B may be performed while stirring the treatment solution and continuously or intermittently replenishing ozone water of a predetermined concentration into the container so that the $O_3$ concentration around the electrode group 100 is maintained at 10 ppm or more in a state in which the electrode group 100 is in contact with the treatment solution in the container. Further, for example, Step B may be performed while stirring the treatment solution and continuously or intermittently generating $O_3$ in the container using a known ozone generator so that the $O_3$ concentration around the electrode group 100 is maintained at 10 ppm or more in a state in which the electrode group 100 is in contact with the treatment solution in the container.

By causing an electrochemical reaction on the surface of the first BDD electrode 15, $O_3$ present around the electrode group 100 is gradually consumed as the electrochemical reaction progresses. As described above, by performing Step B in a state which the treatment solution flows over the surface of the first BDD electrode 15, $O_3$ is newly replenished to the periphery of the electrode group 100 by replacing the treatment solution around the electrode group 100. As a result, the $O_3$ concentration around the electrode group 100 can always be maintained at 10 ppm or more. Therefore, the surface of the first BDD electrode 15 can be reliably and sufficiently modified to a surface suitable for measuring the $O_3$ concentration.

In Step B, the speed at which the potential of the first BDD electrode 15 is swept (hereinafter also referred to as "sweep rate in Step B") can be set to, for example, 0.05 V/sec or more, preferably 0.1 V/sec or more. When the sweep rate in Step B is 0.05 V/sec or more, the surface of the first BDD electrode 15 can be reliably and sufficiently modified to a surface suitable for measuring the $O_3$ concentration. As a result, the current peak can be reliably observed in the voltammogram of the sensor 10. When the sweep rate in Step B is 0.1 V/sec or more, the surface of the first BDD electrode 15 can be more reliably and sufficiently modified to a surface suitable for measuring the $O_3$ concentration. The upper limit of the sweep rate in Step B is not particularly limited, but can be set to, for example, about 1 V/sec. When the sweep rate in Step B exceeds 1 V/sec, in the voltammogram obtained by plotting the current value of the electrochemical reaction caused on the surface of the first BDD electrode 15 during the execution of Step B (during the potential sweep in Step B), the full width at half-maximum of the current peak becomes wide, and the current peak becomes difficult to discern (a sharp peak cannot be observed). As a result, it becomes difficult to determine whether or not the sensitivity of the sensor 10 described later, has reached the saturation sensitivity.

The following conditions are exemplified as other conditions of Step B.

Treatment solution temperature: 5 °C or more and 30 °C or less
Sweep direction: predetermined one direction (one of a positive direction and a negative direction)
Potential range: 0 V to -1.5 V

By performing Step B even once, the current peak can be observed in the voltammogram of the sensor 10. In addition, the sensitivity of the sensor 10 can be increased by performing Step B even once. For example, the sensitivity of the sensor 10 can be 2 $\mu A/(cm^2 \cdot ppm)$ or more.

In addition, Step B is preferably performed over a plurality of times, that is, repeated over a predetermined number of times. Accordingly, the sensitivity of the sensor 10 can be reliably increased to the saturation sensitivity. Step B is more preferably repeated until the sensitivity of the sensor 10 reaches the saturation sensitivity. Whether or not the sensitivity of the sensor 10 has reached the saturation sensitivity can be determined based on whether or not the maximum energization current value at the time of potential sweeping has reached saturation in a voltammogram obtained by plotting the current value of the electrochemical reaction caused on the surface of the first BDD electrode 15 during potential sweeping in Step B. Therefore, Step B is preferably performed while acquiring the voltammogram and confirming the maximum energization current value at the time of potential sweeping. The number of executions of Step B until the sensitivity of the sensor 10 reaches the saturation sensitivity varies depending on the specification of the sensor 10, the $O_3$ concentration in the treatment solution, and the like.

It is further preferable that Step B is additionally performed a plurality of times (for example, about ten times) after the sensitivity of the sensor 10 reaches the saturation sensitivity. As a result, (the sensitivity of) the sensor 10 is less likely to deteriorate, and the sensitivity of the sensor 10 can be maintained in a saturated state for a long time. That is, the sensitivity of the sensor 10 that has reached the saturation sensitivity can be stabilized. For example, the variation in sensitivity of the sensor 10 can be 30 % or less. As a result, the reproducibility of the LSV measurement is further increased.

When Step B is repeatedly performed, Step B does not necessarily need to be performed continuously. For example, the operation may be interrupted in during the repetition process of Step B, and the repetition process of Step B may be continued after a certain period of time has elapsed. In this case too, a similar effect to the case where Step B is continuously performed can be obtained.

(3) Electrochemical Sensor System Configuration

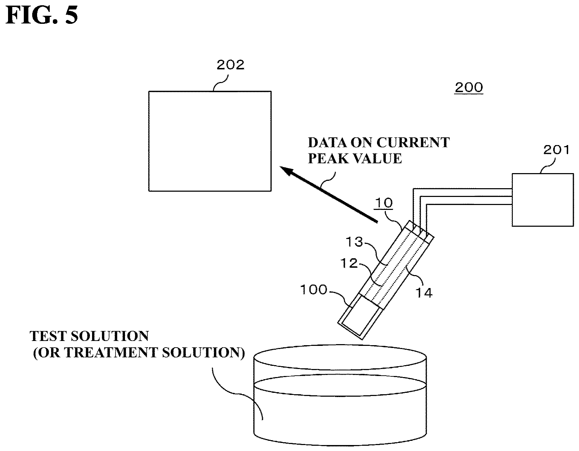

Next, an electrochemical sensor system including the above-described electrochemical sensor 10 will be described with reference to FIG. 5.

As illustrated in FIG. 5, an electrochemical sensor system (hereinafter also referred to as "system 200") according to the present embodiment includes the sensor 10, a potential applying unit 201, and a control unit 202.

The potential applying unit 201 is configured such that the potential of the first BDD electrode 15 can be swept against the potential of the second BDD electrode 16 at a predetermined speed. The potential applying unit 201 is also configured to be capable of applying a predetermined potential between the first BDD electrode 15 and the second BDD electrode 16. Various known potentiostats or the like can be used as the potential applying unit 201.

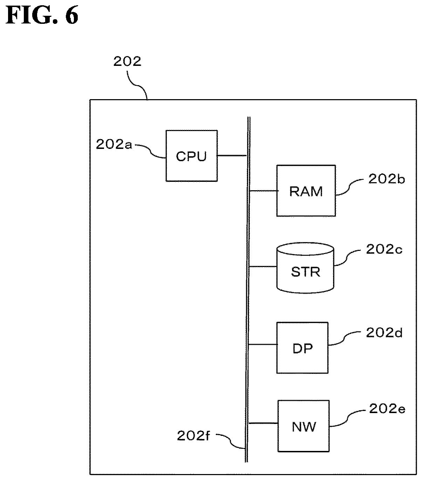

The sensor 10 and the potential applying unit 201 are connected to a control unit (control device or controller) 202 configured as a computer. As illustrated in FIG. 6, the control unit 202 is configured as a computer (a smartphone, a tablet, a PC, or the like) including CPU (Central Processing Unit) 202a, a RAM (Random Access Memory) 202b, a storage unit 202c, an output unit 202d configured as a display or the like, and a communication unit 202e using wireless or wired communication. The CPU 202a, the RAM 202b, the storage unit 202c, the output unit 202d, and the communication unit 202e are configured to exchange data with each other via an internal bus 202f.

The storage unit 202c includes a nonvolatile memory device such as a flash memory or a hard disk drive (HDD). In the storage unit 202c, a control program for controlling the operation and the like of the control unit 202, a data file used in the operation, and the like are readably stored. Hereinafter, the control program, the data file, and the like will be collectively referred to simply as a program. The RAM 202b is configured as a memory area (work area) in which programs, data, and the like read by the CPU 202a are temporarily held. By the CPU 202a executing the control program read out from the storage unit 202c, when the LSV measurement is performed using the above-described sensor 10, the data of the current peak value in the obtained voltammogram is acquired from the sensor 10 via the communication unit 202e such as a wireless or wired communication, the acquired data of the current peak value is readably stored in the storage unit 202c, or the acquired data of the current peak value is output to the output unit 202d to be displayed.

(4) Effects

According to the present embodiment, one or more effects described below can be obtained.

(a) With the sensor 10 according to the present embodiment, a predetermined surface treatment is performed on the first BDD electrode 15 (the working electrode 15). Specifically, in a state in which the electrode group 100 (that is, the first BDD electrode 15, the second BDD electrode 16, and the third BDD electrode 17) is in contact with a treatment solution containing $O_3$ at a concentration of 10 ppm or more, a process of sweeping the potential of the first BDD electrode 15 against the potential of the second BDD electrode 16 at a predetermined speed to cause a predetermined electrochemical reaction on the surface of the first BDD electrode 15 is performed on the first BDD electrode 15. Accordingly, in the voltammogram of the sensor 10, a current peak corresponding to the $O_3$ concentration in the test solution is observed. When a current peak is observed in the voltammogram of the sensor 10, the preparation of the calibration curve and the evaluation of the $O_3$ concentration using the calibration curve can be performed based on the measured current peak value. That is, since the current peak can be observed in the voltammogram of the sensor 10, the calibration curve can be prepared and the $O_3$ concentration can be evaluated without depending on the potential. As a result, even when the potential of the second BDD electrode 16 (reference electrode 16), which is the floating potential, fluctuates, an error is less likely to occur in the measured value of the $O_3$ concentration. That is, even with the sensor 10 in which the working electrode 15 and the reference electrode 16 are BDD electrodes, the concentration of $O_3$ in the test solution, for example, the concentration of dissolved ozone in ozone water prepared using tap water as raw water can be measured with high accuracy by LSV measurement using the sensor 10.

(b) The sensor 10 has a high sensitivity, for example, saturation sensitivity. For example, the sensor 10 has a sensitivity of $2 \mu A/(cm^2 \cdot ppm)$ or more. Accordingly, the current peak can be easily observed in the voltammogram of the sensor 10, and the measurement error of the current peak value can be reduced. In addition, even when the test solution has a low $O_3$ concentration, the current peak can be observed in the voltammogram of the sensor 10, and the $O_3$ concentration can be measured with high accuracy.

(c) The sensor 10 has a stable sensitivity. For example, in the sensor 10, the variation in sensitivity is 30 % or less. Accordingly, even when the $O_3$ concentration is repeatedly measured using the sensor 10, an error is less likely to occur in the obtained $O_3$ concentration. That is, even when the sensor 10 is used a plurality of times, the $O_3$ concentration in the test solution can be measured with high accuracy.

(d) The sensitivity of the sensor 10 can be increased by performing a predetermined surface treatment (the above-described Step B) on the first BDD electrode 15. For example, the sensitivity of the sensor 10 can be increased to saturation sensitivity. Further, by performing the above-described Step B over a plurality of times, the sensitivity of the sensor 10 can be reliably increased to the saturation sensitivity.

(e) By additionally performing the above-described Step B over a plurality of times after the sensitivity of the sensor 10 reaches the saturation sensitivity, the sensitivity of the sensor 10 can be maintained in the saturation state for a long time. That is, the sensitivity of the sensor 10 can be stabilized. For example, the variation in sensitivity of the sensor 10 can be 30 % or less.

(f) By performing the above-described Step B using a treatment solution containing $O_3$ at a concentration of 10 ppm or more, the surface of the first BDD electrode 15 can be modified to a surface suitable for measuring the $O_3$ concentration. As a result, even with the sensor 10 in which the working electrode 15 and the reference electrode 16 are constituted of BDD electrodes, the sensor 10 in which a current peak can be observed in a voltammogram obtained by LSV measurement is obtained.

A technique of treating a general semiconductor surface with a solution containing an acid such as dilute sulfuric acid is conventionally known. However, when the surface treatment corresponding to Step B was performed on the first BDD electrode 15 using a solution containing an acid such as dilute sulfuric acid as a treatment solution, the sensitivity of the sensor could not be sufficiently increased, and the sensitivity was not stabilized. In addition, when LSV measurement was performed on a test solution using such a sensor, a current peak could not be observed in the obtained voltammogram.

(g) By performing the above-described Step B in a state in which the treatment solution flows over the surface of the first BDD electrode 15, the $O_3$ concentration in the treatment solution present around the first BDD electrode 15 can be always maintained at a concentration of 10 ppm or more. As a result, the surface of the first BDD electrode 15 can be reliably and sufficiently modified to be suitable for measuring the $O_3$ concentration.

(h) When the sweep rate in the above-described Step B is 0.05 V/sec or more, the surface of the first BDD electrode 15 can be reliably and sufficiently modified to a surface suitable for measuring the $O_3$ concentration.

In the present embodiment, an example in which the dissolved ozone concentration in ozone water prepared using tap water as raw water is measured by LSV measurement using the sensor 10 has been described. That is, in the present embodiment, an example in which the test solution is ozone water prepared using tap water as raw water has been described. In this case, there is a concern that the calcium hypochlorite in tap water interferes with the sensitivity of the sensor. Therefore, the present inventors performed an experiment to confirm whether or not the sensitivity of the sensor 10 is affected by chlorine (hypochlorous acid).

First, ozone water (Sample A) prepared using tap water as raw water and an aqueous solution (Sample B) prepared by adding hypochlorous acid (3.5 ppm) at a predetermined concentration to ozone water prepared using tap water as raw water were prepared as test solutions. The $O_3$ concentration of Samples A and B was respectively measured using a UV absorbance meter. The $O_3$ concentration of Sample A was 3.8 mg/L, and the $O_3$ concentration of Sample B was 3.1 mg/L. As described above, the $O_3$ concentrations of the Samples A and B are substantially the same. Then, Samples A and B were subjected to LSV measurement using the sensor 10 under the same conditions, and the current peak value was measured. The current peak value of Sample A was $-11.7 \mu A/cm^2$, and the current peak value of Sample B was $-11.6 \mu A/cm^2$. From these results, it can be seen that the current peak values obtained by LSV measurement substantially coincide with each other regardless of the presence or absence of hypochlorous acid. That is, it was confirmed that the sensitivity of the sensor 10 was not affected by chlorine (hypochlorous acid) in ozone water.

In addition, ozone water is sometimes used not only in sanitary applications but also in large-scale plants such as high-grade water purification treatment of water offices and cleaning of semiconductor substrates. Since the solubility of $O_3$ varies depending on the pH of ozone water, the pH of ozone water may be controlled depending on the purpose of use. Therefore, the present inventors conducted an experiment to confirm whether or not the sensitivity of the sensor 10 is affected by the pH of ozone water.

First, 10 vol% of a 1 mol phosphate buffer solution (PB) having a different pH was added to ozone water prepared using tap water as raw water ($O_3$/0.1 M PB (pH control)), and four types of ozone water having pH of 5, 6, 7, and 8 were prepared. Then, these four types of ozone water were subjected to LSV measurement using the sensor 10 under the same conditions to measure the $O_3$ concentration. Further, $O_3$ concentrations of the above four types of ozone water were measured using a UV absorbance meter. As a result, it was confirmed that the value of the $O_3$ concentration calculated from the current peak value obtained by the LSV measurement and the value of the $O_3$ concentration measured by the UV absorbance meter substantially coincided with each other even when the pH was changed. From this experiment, it can be seen that the sensitivity of the sensor 10 is not affected by the pH, i.e., the sensitivity of the sensor 10 is not dependent on the pH of the ozone water.

(5) Modification Examples

The present embodiment can be modified as in the following modification examples. In the following description of the modified example, the same components as those of the above-described embodiments are denoted by the same reference signs, and the description thereof will be omitted. Further, the above-described embodiments and the following modification examples can be arbitrarily combined.

(Modification Example 1)

For example, the surface treatment performed on the first BDD electrode 15 may involves:

preparing a treatment solution containing $O_3$ at a concentration of 10 ppm or more (StepA); and
causing a predetermined electrochemical reaction on the surface of the first BDD electrode 15 by maintaining a state in which a predetermined potential is applied between the first BDD electrode 15 and the second BDD electrode 16 for a predetermined time in a state in which the electrode group 100 (that is, the first BDD electrode 15, the second BDD electrode 16, and the third BDD electrode 17) is in contact with a treatment solution containing $O_3$ at a concentration of 10 ppm or more (Step C).

That is, Step C may be performed instead of the above-described Step B.
The following conditions are exemplified as conditions for performing Step C.

Treatment solution temperature: 5 °C or more and 30 °C or less
Applied potential: predetermined potential in the range of -1 V to -5 V, and preferably predetermined potential in the range of -2 V to -4 V

Step C is also performed in a state in which the treatment solution flows over the surface of the first BDD electrode 15 as performed in Step B. As a result, the treatment solution around the electrode group 100 is replaced, and $O_3$ is newly replenished to the periphery of the electrode group 100. As a result, the $O_3$ concentration around the electrode group 100 can always be maintained at 10 ppm or more. By performing Step C as described above, the surface of the first BDD electrode 15 can be modified to a surface suitable for measuring the $O_3$ concentration.
Step C is preferably performed until the sensitivity of the sensor 10 reaches the saturation sensitivity. That is, it is preferable to maintain a state in which a predetermined potential is applied between the first BDD electrode 15 and the second BDD electrode 16 until the sensitivity of the sensor 10 reaches the saturation sensitivity, and it is further preferable to maintain a state in which a predetermined potential is applied for a while even after the sensitivity of the sensor 10 reaches the saturation sensitivity. For example, the potential application time in Step C is preferably long enough to increase the sensitivity of the sensor 10 to the saturation sensitivity. In Step B, by repeatedly acquiring the voltammogram, whether or not the sensitivity of the sensor 10 has reached the saturation sensitivity can be easily determined from the state of the change in the maximum energization current value at the time of potential sweeping, but in Step C, it is difficult to detect (determine) whether or not the sensitivity of the sensor 10 has reached the saturation sensitivity. Therefore, in the case of Step C, the determination as to whether or not the sensitivity of the sensor 10 has reached the saturation sensitivity is performed based on the integrated charge amount with respect to the first BDD electrode 15. Since the integrated charge amount required until the sensitivity of the sensor 10 reaches the saturation sensitivity varies depending on the specification of the sensor 10, the $O_3$ concentration in the treatment solution, and the like, it is necessary to set the target integrated charge amount to a value having a sufficient margin. As an example, in Step C, a state in which a predetermined potential is applied between the first BDD electrode 15 and the second BDD electrode 16 is maintained until the integrated charge amount with respect to the first BDD electrode 15 becomes 0.05 $mC/cm^2$ or more, preferably 0.08 $mC/cm^2$ or more. Thus, the sensitivity of the sensor 10 can be increased to the saturation sensitivity. In addition, the sensitivity of the sensor 10 can be maintained in the saturated state for a long time, that is, the sensitivity of the sensor 10 can be stabilized. That is, the sensor 10 having both high sensitivity and stable sensitivity can be obtained.

Even if Step C is performed until the integrated charge amount with respect to the first BDD electrode 15 exceeds, for example, 0.5 mC/cm$^2$, the effect of increasing the sensitivity of the sensor 10 to the saturation sensitivity and the effect of stabilizing the sensitivity of the sensor 10 reach a limit, yet the productivity of the sensor 10 decreases. Therefore, Step C is preferably performed within a range in which the integrated charge amount with respect to the first BDD electrode 15 is, for example, 0.05 mC/cm$^2$ or more and 0.5 mC/cm$^2$ or less, and preferably 0.08 mC/cm$^2$ or more and 0.5 mC/cm$^2$ or less.

Also in the present modification example, even in the case of the sensor 10 in which the working electrode 15 and the reference electrode 16 are constituted of BDD electrodes, the sensor 10 capable of observing the current peak corresponding to the $O_3$ concentration in the test solution in the voltammogram obtained by the predetermined LSV measurement can be obtained, and similar effects to the above-described embodiments can be obtained.

(Modification Example 2)

In the above-described embodiments and modification examples, an example in which the sensor 10 includes the first BDD electrode 15, the second BDD electrode 16, and the third BDD electrode 17, that is, an example in which the working electrode 15, the reference electrode 16, and the counter electrode 17 are constituted of BDD electrodes has been described, but the present disclosure is not limited thereto. The counter electrode 17 may be an electrode other than the BDD electrode. For example, the counter electrode 17 may be an electrode constituted of a metal such as Pt, Au, Cu, Pd, Ni, or Ag, a carbon electrode, or the like. In this case, the counter electrode 17 may be formed integrally with the wiring 14 by a subtractive method, a semi-additive method, or the like. Also in the present modification example, since the predetermined surface treatment is performed on the first BDD electrode 15, similar effects to the above-described embodiments and Modification Example 1 can be obtained.

(Modification Example 3)

In the above-described embodiments and modification examples, an example in which the BDD electrode is a vertical electrode, that is, an example in which conduction is performed from the rear surface of the BDD electrode has been described, but the present disclosure is not limited thereto. A conductive wiring may be connected to the surface of the electrode film 21 using solder, silver paste, or the like to establish conduction from the surface of the BDD electrode. Further, in the case of conducting from the surface of the BDD electrode, instead of the conductive substrate 22, a ceramic substrate or a substrate constituted of a high-resistance material may be used as the substrate that supports the electrode film 21.

When conducting from the surface of the electrode film 21, it is necessary to cover the solder or the silver paste with a thermosetting resin or an ultraviolet curable resin so that the solder or the silver paste does not come into contact with the test solution during the LSV measurement. However, since the resin before curing is in a liquid state (paste state), it is difficult to adjust the area of the surface (that is, the surface of the portion not covered with the thermosetting resin or the ultraviolet curable resin) contributing to detection of $O_3$ in the surface of the electrode film 21 to a predetermined area. Therefore, an error is likely to occur in the current peak value obtained by the LSV measurement among the plurality of sensors 10. From the viewpoint of reducing variation in measurement accuracy among the plurality of sensors 10, it is preferable that the BDD electrode is configured as a vertical electrode that conducts from the rear surface of the substrate 22 as described above.

Embodiments and modification examples of the present disclosure have been specifically described above. However, the present disclosure is not limited to the above-described embodiments and modification examples, and various modification examples can be made without departing from the scope of the present disclosure.

<Other Embodiments>

In the above-described embodiments and modification examples, an example in which the voltammogram obtained by the LSV measurement performed using the sensor 10 has a peak corresponding to the $O_3$ concentration in the test solution has been described, but the present disclosure is not limited thereto. That is, also in a voltammogram (cyclic voltammogram) obtained by performing cyclic voltammetry (CV measurement) using the sensor 10, a current peak corresponding to the $O_3$ concentration in the test solution can be observed as in the case of performing LSV measurement. As a result, even in the case where the CV measurement is performed using the sensor 10, similar effects to the above-described embodiments and modification examples can be obtained.

In addition, in the above-described embodiments and modification examples, for Step B (surface treatment performed on the first BDD electrode 15), an example in which the sweep direction of the potential is one predetermined direction has been described, but the present disclosure is not limited thereto. In Step B, the sweep of the potential of the first BDD electrode 15 against the potential of the second BDD electrode 16 may be reciprocated in a predetermined range. For example, in Step B, the potential of the first BDD electrode 15 may be swept in the negative direction (reverse direction) to a predetermined potential at a predetermined speed against the potential of the second BDD electrode 16 and then swept in the positive direction (forward direction) to the original potential in a state in which the electrode group 100 is in contact with the treatment solution containing $O_3$ at a concentration of 10 ppm or more. Even in this case, as in the above-described embodiments, a predetermined electrochemical reaction can be caused on the surface of the first BDD electrode 15, and the surface (detection surface) of the first BDD electrode 15 can be modified to a surface suitable for measuring the $O_3$ concentration. As a result, similar effects to the above-described embodiments and modification examples can be obtained.

EXAMPLES

Hereinafter, experimental results for confirming the effects of the above-described embodiments will be described.

<Sample 1>

A single crystal Si substrate was prepared as a conductive substrate, a scratch treatment was performed on a surface of the single crystal Si substrate serving as a crystal growth surface, and then an electrode film constituted of polycrystalline diamond was grown on the crystal growth surface of the single crystal Si substrate by using a CVD apparatus illustrated in FIG. 3 to fabricate a stack substrate including the single crystal Si substrate and the electrode film. Then, a concave groove having a predetermined pattern was formed from the rear surface of the stack substrate. The stack substrate was divided along the groove to fabricate a first BDD electrode (working electrode) having a planar area of 24.08 $mm^2$. Likewise, a second BDD electrode (reference electrode) and a third BDD electrode (counter electrode) were fabricated. The second BDD electrode and the third BDD electrode were fabricated by the procedure and under the conditions as those used for the first BDD electrode except that the concave groove formation pattern was changed and the planar area was adjusted to a predetermined area within the condition range described in the above-described embodiments.
Using the obtained first BDD electrode, second BDD electrode, and third BDD electrode, an electrochemical sensor was fabricated by the method described in the above-described embodiments. In fabricating the sensor, Steps A and B in the above-described embodiments were performed. In Step A, a treatment solution containing $O_3$ at a concentration of 10 ppm was prepared. In Step B, the potential of the first BDD electrode was swept at a rate of 0.1 V/sec against the potential of the second BDD electrode in a state in which the first to third BDD electrodes were in contact with the treatment solution in a flow state. Here, the potential of the first BDD electrode was swept in the negative direction from 0 V to -1.3 V. Here, Step B was performed only once. The other conditions in Step B were set to predetermined conditions within the range of the conditions described in the above-described embodiments. The sensor thus obtained is referred to as Sample 1.

<Samples 2-5>

Sample 2 was fabricated by the procedure and under the conditions as those used for Sample 1 except that the above-described Step B was repeated 5 times. Sample 3 was fabricated by the procedure and under the conditions as those used for Sample 1 except that the above-described Step B was repeated 15 times. Sample 4 was fabricated by the procedure and under the conditions as those used for Sample 1 except that the above-described Step B (i.e., the surface treatment on the first BDD electrode) was not performed. Sample 5 was fabricated by the procedure and under the conditions as those used for Sample 1 except that a treatment solution containing $O_3$ at a concentration of less than 10 ppm was prepared in the above-described Step A, and the above-described Step B was repeated 15 times using a treatment solution containing $O_3$ at a concentration of less than 10 ppm.

<Sample 6>

Sample 6 was fabricated by the procedure and under the conditions as those used for Sample 1 except that a first BDD electrode having a planar area of 12.00 $mm^2$ was fabricated by adjusting the formation pattern of the concave groove and that Step B was repeated 15 times.

<Samples 7-10>

Sample 7 was fabricated by the procedure and under the conditions as those used for Sample 1 except that the first BDD electrode having a planar area of 4.00 $mm^2$ was fabricated by adjusting the formation pattern of the concave groove and that Step B was repeated 15 times. Sample 8 was fabricated by the procedure and under the conditions as those used for Sample 1, except that a first BDD electrode having a planar area of 5.88 mm$^2$ was fabricated by adjusting the formation pattern of the concave groove and that Step B was repeated 15 times. Sample 9 was fabricated by the procedure and under the conditions as those used for Sample 1 except that a first BDD electrode having a planar area of 11.76 mm$^2$ was fabricated by adjusting the formation pattern of the concave groove and that Step B was repeated 15 times. Sample 10 was fabricated by the procedure and under the conditions as those used for Sample 1 except that a first BDD electrode having a planar area of 50.24 mm$^2$ was fabricated by adjusting a formation pattern of the concave groove and that Step B was repeated 15 times.

<Evaluation>

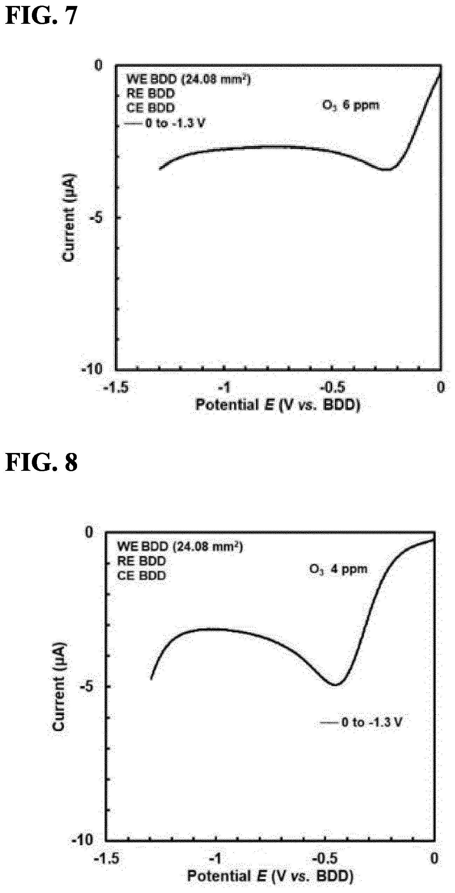

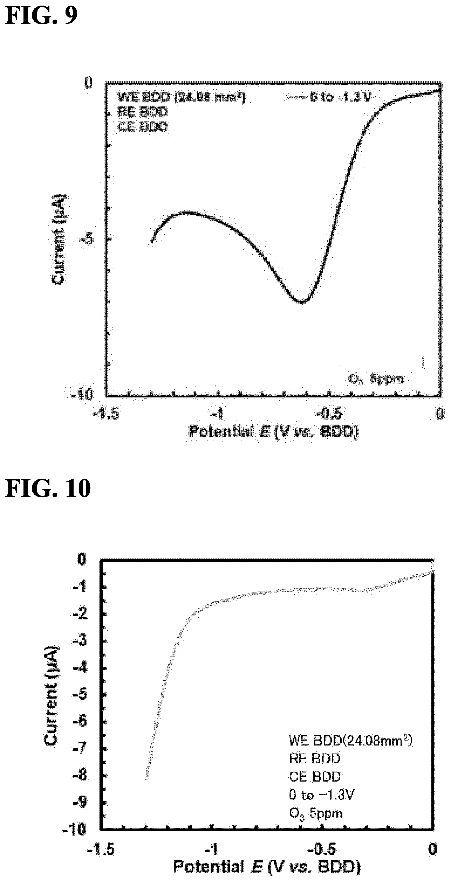

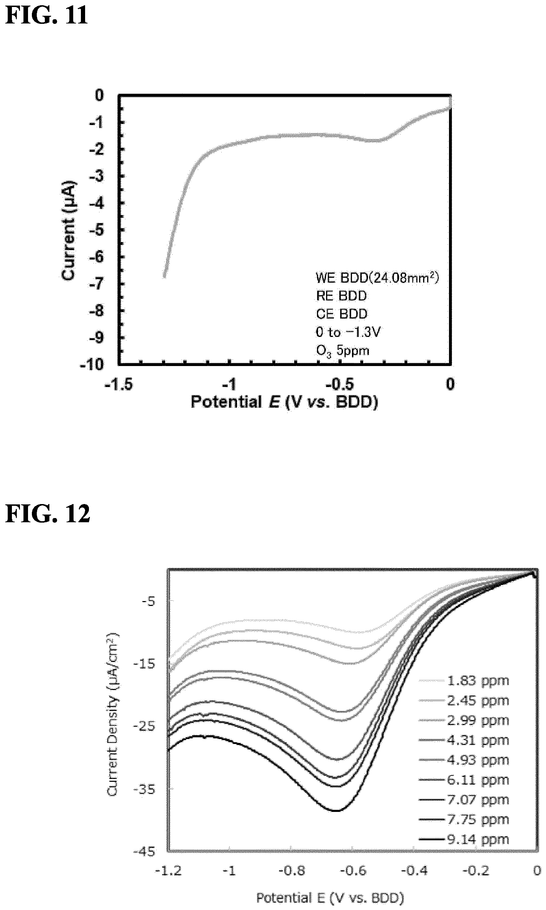

Using Sample 1, LSV measurement was performed in which the potential of the first BDD electrode was swept in the negative direction from 0 V to -1.3 V at a rate of 0.1 V/sec against the potential of the second BDD electrode in a state in which the first to third BDD electrodes were in contact with a test solution in a stationary state containing $O_3$ at a concentration of 6 ppm. FIG. 7 shows a voltammogram obtained by LSV measurement using Sample 1. In addition, using Sample 2, LSV measurement was performed in which the potential of the first BDD electrode was swept in the negative direction from 0 V to -1.3 V at a rate of 0.1 V/sec against the potential of the second BDD electrode in a state in which the first to third BDD electrodes were in contact with a test solution in a stationary state containing $O_3$ at a concentration of 4 ppm. FIG. 8 shows a voltammogram obtained by LSV measurement using Sample 2. In addition, using Sample 3, LSV measurement was performed in which the potential of the first BDD electrode was swept in the negative direction from 0 V to -1.3 V at a rate of 0.1 V/sec against the potential of the second BDD electrode in a state in which the first to third BDD electrodes were in contact with a test solution in a stationary state containing $O_3$ at a concentration of 5 ppm. FIG. 9 shows a voltammogram obtained by LSV measurement using Sample 3. In addition, using Sample 4, LSV measurement was performed in which the potential of the first BDD electrode was swept in the negative direction from 0 V to -1.3 V at a rate of 0.1 V/sec against the potential of the second BDD electrode in a state in which the first to third BDD electrodes were in contact with a test solution in a stationary state containing $O_3$ at a concentration of 5 ppm. FIG. 10 shows a voltammogram obtained by LSV measurement using Sample 4. In addition, using Sample 5, LSV measurement was performed in which the potential of the first BDD electrode was swept in the negative direction from 0 V to -1.3 V at a rate of 0.1 V/sec against the potential of the second BDD electrode in a state in which the first to third BDD electrodes were in contact with a test solution in a stationary state containing $O_3$ at a concentration of 5 ppm. FIG. 11 shows a voltammogram obtained by LSV measurement using Sample 5. The horizontal axis of the voltammograms shown in FIGS. 7 to 11 is a potential based on the potential of the second BDD electrode.

The sensitivity of the sensor was calculated from the voltammograms of Samples 1 to 3 shown in FIGS. 7 to 9. The sensitivity of Sample 1 was 2.4 $\mu$A/(cm$^2$·ppm), the sensitivity of Sample 2 was 5.19 $\mu$A/(cm$^2$·ppm), and the sensitivity of Sample 3 was 5.81 $\mu$A/(cm$^2$·ppm).

As shown in FIGS. 7 to 9, a current peak is observed in the voltammograms of Samples 1 to 3. From this, it can be seen that even by performing Step B only once, a current peak can be observed in the voltammogram of the sensor even in the electrochemical sensor in which the working electrode and the reference electrode are constituted of BDD electrodes. It is also found from Sample 1 that the sensitivity of the sensor can be 2 $\mu$A/(cm$^2$·ppm) or more even by performing Step B only once.

As shown in FIGS. 8 and 9, in the voltammograms of Samples 2 and 3, the current peak is higher (the current peak is sharper) than in the voltammogram of Sample 1 shown in FIG. 7. The sensitivity of the sensors of Samples 2 and 3 is higher than the sensitivity of the sensor of Sample 1. From these results, it can be seen that the sensitivity of the sensor can be increased to the saturation sensitivity (near saturation) by repeating Step B a plurality of times, and the current peak can be easily observed in the voltammogram of the sensor.

As shown in FIG. 10, no current peak is observed in the voltammogram of Sample 4. From this, it can be seen that the current peak cannot be observed in the voltammogram obtained by the LSV measurement using the electrochemical sensor in which the working electrode and the reference electrode are constituted of the BDD electrode when Step B is not performed, that is, when the surface treatment is not performed on the first BDD electrode.

As shown in FIG. 11, no current peak is observed in the voltammogram of Sample 5. From this, it can be seen that a current peak cannot be observed in the obtained voltammogram even when Step B is performed using a treatment solution containing $O_3$ at a concentration of less than 10 ppm. This is probably because the surface of the first BDD electrode is not sufficiently modified to a surface suitable for measuring the $O_3$ concentration even when Step B is performed using a treatment solution containing $O_3$ at a concentration of less than 10 ppm.

Next, LSV measurement was performed on a plurality of test solutions having different $O_3$ concentrations using Sample 6. That is, using Sample 6, LSV measurement was performed in which the potential of the first BDD electrode was swept in the negative direction from 0 V to -1.3 V at a rate of 0.1 V/sec against the potential of the second BDD electrode in a state in which the first to third BDD electrodes were in contact with a test solution in a stationary state containing $O_3$ at a predetermined concentration. FIG. 12 shows a voltammogram obtained by LSV measurement using Sample 6. The horizontal axis of the voltammogram shown in FIG. 12 is a potential based on the potential of the second BDD electrode.

From FIG. 12, it can be confirmed that a current peak corresponding to the $O_3$ concentration in the test solution is observed in the obtained voltammogram when the LSV measurement is performed on the test solution in a stationary state containing $O_3$ at a predetermined concentration using Sample 6. That is, in Sample 6, it can be confirmed that the current peak value varies depending on the $O_3$ concentration in the test solution. From FIG. 12, it can be confirmed that with the sensor of Sample 6, a current peak is observed in the voltammogram of the sensor when the concentration of $O_3$ in the test solution is at least about 1.8 ppm (1.83 ppm) or more. That is, with the sensor of Sample 6, it can be confirmed that the current peak can be observed in the voltammogram of the sensor even when the test solution has a low $O_3$ concentration.

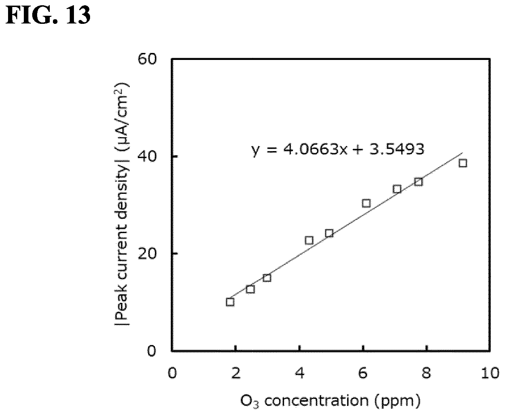

FIG. 13 shows a calibration curve of Sample 6 prepared based on the peak value of the current shown in FIG. 12. It can be seen from FIG. 13 that the calibration curve shows very good linearity. From this, it can be seen that, by performing a predetermined surface treatment on the first BDD electrode, the $O_3$ concentration in the test solution can be measured with high accuracy even in an electrochemical sensor in which the working electrode and the reference electrode are constituted of BDD electrodes.

The sensitivity (saturation sensitivity) of the sensor was calculated from the current peak value obtained by LSV measurement using each of Samples 3 and 6 to 10. The present inventors have confirmed that in all of Samples 3 and 6 to 10, a current peak is observed in a voltammogram obtained by LSV measurement.

The calculated sensitivities of the samples, arranged in order of electrode area, were as follows.

Sample 7 (electrode area: 4.00 mm$^2$): 5.09 $\mu$A/(cm$^2$·ppm)
Sample 8 (electrode area: 5.88 mm$^2$): 4.28 $\mu$A/(cm$^2$·ppm)
Sample 9 (electrode area: 11.76 mm$^2$): 5.55 $\mu$A/(cm$^2$·ppm)
Sample 6 (electrode area: 12.00 mm$^2$): 4.07 $\mu$A/(cm$^2$·ppm)
Sample 3 (electrode area: 24.08 mm$^2$): 4.26 $\mu$A/(cm$^2$·ppm)
Sample 10 (electrode area: 50.24 mm$^2$): 6.16 $\mu$A/(cm$^2$·ppm)

From these calculation results of the sensitivities, it can be seen that the sensitivity of the sensor does not depend on the planar area of the first BDD electrode.

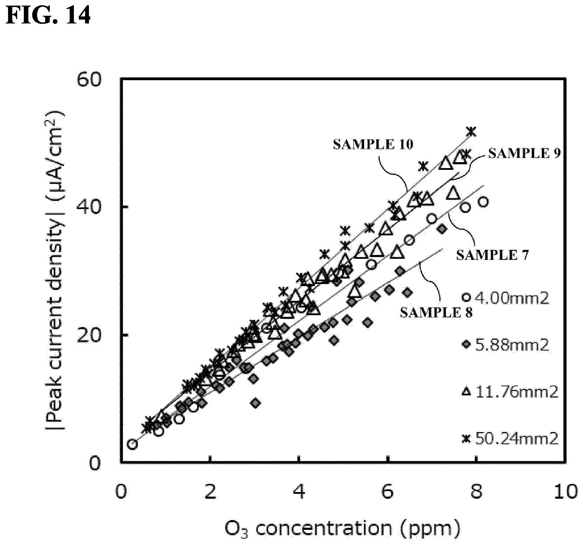

Also for Samples 7 to 10, a calibration curve showing the relationship between the current peak value obtained by LSV measurement using each sample and the $O_3$ concentration was prepared. FIG. 14 shows a calibration curve prepared from current peak values obtained by LSV measurement using Samples 7 to 10. The "$O_3$ concentration" on the horizontal axis of FIG. 14 is the $O_3$ concentration in the test solution (standard solution) measured using a UV absorbance meter (ultraviolet-visible spectrophotometer, manufactured by AS ONE, Model No.: ASUV-1100). It can be seen from FIG. 14 that in any of Samples 7 to 10, the current peak value obtained by LSV measurement using each sample indicates a certain correlation with the $O_3$ concentration in the test solution, and an accurate calibration curve can be prepared.

The approximate expressions of the calibration curves of Samples 6 to 10 shown in FIGS. 13 and 14 are as follows.

$$\text{Sample 6: } y = 4.0663x + 3.5493$$

$$\text{Sample 7: } y = 5.0908x + 1.7896$$

$$\text{Sample 8: } y = 4.2786x + 2.5615$$

$$\text{Sample 9: } y = 5.5454x + 3.1271$$

$$\text{Sample 10: } y = 6.1579x + 2.6297$$

<Preferred Embodiments of the Present Disclosure>

Hereinafter, preferred embodiments of the present disclosure will be additionally described.

(Supplementary Description 1)

In an aspect of the present disclosure,
there is provided an electrochemical sensor, including:

at least a first diamond electrode as a working electrode; and
a second diamond electrode as a reference electrode, wherein
a current peak corresponding to an ozone concentration in a test solution is observed in a voltammogram being obtained by linear sweep voltammetry measurement in which the first diamond electrode and the second diamond electrode are brought into contact with the test solution being in a stationary state, the test solution containing ozone at a predetermined concentration.

(Supplementary Description 2)

In another aspect of the present disclosure,
there is provided an electrochemical sensor, including:

a first diamond electrode as a working electrode; and
a second diamond electrode as a reference electrode, wherein
a current peak corresponding to an ozone concentration in a test solution is observed in a voltammogram obtained by performing linear sweep voltammetry measurement in which a potential of the first diamond electrode is swept against a potential of the second diamond electrode at a rate of 0.1 V/sec in a state in which the first diamond electrode and the second diamond electrode are in contact with the test solution being in a stationary state, the test solution containing ozone at a predetermined concentration.

(Supplementary Description 3)

It is preferable that in the sensor according to the Supplementary Description 1 or 2,
a sensitivity is 2 $\mu$A/(cm$^2$·ppm) or more, the sensitivity being an absolute value of a value obtained by dividing a current peak value by a planar area of the first diamond electrode and the ozone concentration, the current peak value being obtained by performing linear sweep voltammetry measurement in which a potential of the first diamond electrode is swept against a potential of the second diamond electrode at a rate of 0.1 V/sec in a state in which the first diamond electrode and the second diamond electrode are in contact with the test solution.

(Supplementary Description 4)

It is preferable that in the sensor according to any one of the Supplementary Descriptions 1 to 3,
the current peak corresponding to the ozone concentration in the test solution is observed within a potential range of -0.3 V to -0.9 V (vs. the second diamond electrode) in linear sweep voltammetry measurement in which a potential of the first diamond electrode is swept against a potential of the second diamond electrode at a rate of 0.1 V/sec.

(Supplementary Description 5)

It is preferable that in the sensor according to any one of the Supplementary Descriptions 1 to 4,
in a condition in which the ozone concentration in the test solution is at least 1.0 ppm or more, preferably at least 0.5 ppm or more, more preferably at least 0.3 ppm or more, and even more preferably at least 0.1 ppm or more, the current peak is observed in the voltammogram obtained by the linear sweep voltammetry measurement.

(Supplementary Description 6)

It is preferable that in the sensor according to any one of the Supplementary Descriptions 1 to 4,
in a condition in which the ozone concentration in the test solution is at least 1.8 ppm or more, the current peak is observed in the voltammogram obtained by the linear sweep voltammetry measurement.

(Supplementary Description 7)

It is preferable that in the sensor according to any one of the Supplementary Descriptions 1 to 6,
the planar area of the first diamond electrode is 1 mm$^2$ or more and 100 mm$^2$ or less.

(Supplementary Description 8)

It is preferable that in the sensor according to the Supplementary Descriptions 3,
a variation in the sensitivity, calculated using the peak values of the current obtained in each linear sweep voltammetry measurement, is 30 % or less, when the linear sweep voltammetry measurements are performed over a plurality of times under the same ozone concentration condition in the test solution.

(Supplementary Description 9)

In another aspect of the present disclosure,
there is provided a method of manufacturing an electrochemical sensor, the method including:

arranging, on a support substrate, at least a first diamond electrode as a working electrode and a second diamond electrode as a reference electrode; and
performing a predetermined surface treatment on the first diamond electrode, wherein
performing the predetermined surface treatment involves

preparing a treatment solution containing ozone at a concentration of 10 ppm or more, and
in a state in which the first diamond electrode and the second diamond electrode are in contact with the treatment solution, sweeping a potential of the first diamond electrode against a potential of the second diamond electrode at a predetermined speed, and causing an electrochemical reaction on a surface of the first diamond electrode.

(Supplementary Description 10)

In another aspect of the present disclosure,
there is provided a method of manufacturing an electrochemical sensor, the method including:

arranging, on a support substrate, at least a first diamond electrode as a working electrode and a second diamond electrode as a reference electrode; and
performing a predetermined surface treatment on the first diamond electrode, wherein
performing the predetermined surface treatment involves

preparing a treatment solution containing ozone at a concentration of 10 ppm or more, and
causing an electrochemical reaction on a surface of the first diamond electrode by maintaining a state in which a predetermined potential is applied between the first diamond electrode and the second diamond electrode for a predetermined time in a state in which the first diamond electrode and the second diamond electrode are in contact with the treatment solution.

(Supplementary Description 11)

It is preferable that in the method according to the Supplementary Description 9,
the electrochemical reaction is caused (repeated) over a plurality of times.

(Supplementary Description 12)

It is preferable that in the method according to any of the Supplementary Descriptions 9 to 11,
the electrochemical reaction is caused in a state in which the treatment solution flows over the surface of the first diamond electrode.

(Supplementary Description 13)

It is preferable that in the method according to any one of the Supplementary Descriptions 9 to 12,
the electrochemical reaction is caused under a condition under which no peak appears in a voltammogram obtained when the electrochemical reaction is caused for linear sweep voltammetry measurement in which the potential of the first diamond electrode is swept against the potential of the second diamond electrode at a predetermined speed in a state in which the first diamond electrode and the second diamond electrode are in contact with the treatment solution.

(Supplementary Description 14)

It is preferable that in the method according to the Supplementary Description 9,
when causing the electrochemical reaction, the potential of the first diamond electrode is swept at a rate of 0.05 V/sec or more.

(Supplementary Description 15)

It is preferable that in the method according to the Supplementary Description 10,
the electrochemical reaction is caused until an integrated charge amount with respect to the first diamond electrode becomes 0.05 mC/cm$^2$ or more.

(Supplementary Description 16)

In another aspect of the present disclosure,
there provided an electrochemical sensor system that measures an ozone concentration in a test solution containing ozone at a predetermined concentration, the system including the electrochemical sensor according to any one of Supplementary Descriptions 1 to 8.

DESCRIPTION OF SIGNS AND NUMERALS

10 Electrochemical sensor
11 Support substrate
12 to 14 Electrical wiring
15 First diamond electrode (working electrode)
16 Second diamond electrode (reference electrode)
17 Third diamond electrode (counter electrode)
18 Conductive bonding material
19 Insulating resin
20 Waterproof member
21 Electrode film
22 Conductive substrate

**Claims**

1. An electrochemical sensor, comprising:

   a first diamond electrode as a working electrode; and
   a second diamond electrode as a reference electrode, wherein
   a current peak corresponding to an ozone concentration in a test solution is observed in a voltammogram obtained by linear sweep voltammetry measurement in which the first diamond electrode and the second diamond electrode are brought into contact with the test solution, the test solution containing ozone at a predetermined concentration.

2. The electrochemical sensor according to claim 1, wherein a sensitivity is 2 $\mu$A/(cm$^2$·ppm) or more, the sensitivity being an absolute value of a value obtained by dividing a current peak value by a planar area of the first diamond electrode and the ozone concentration, the current peak value being obtained by performing linear sweep voltammetry measurement in which a potential of the first diamond electrode is swept against a potential of the second diamond electrode at a rate of 0.1 V/sec in a state in which the first diamond electrode and the second diamond electrode are in contact with the test solution.

3. The electrochemical sensor according to claim 1, wherein the current peak corresponding to the ozone concentration in the test solution is observed within a potential range of -0.3 V to -0.9 V (vs. the second diamond electrode) in linear sweep voltammetry measurement in which a potential of the first diamond electrode is swept against a potential of the second diamond electrode at a rate of 0.1 V/sec.

4. The electrochemical sensor according to claim 1, wherein in a condition in which the ozone concentration in the test solution is at least 1.0 ppm or more, the current peak is observed in the voltammogram obtained by the linear sweep voltammetry measurement.

5. The electrochemical sensor according to claim 1, wherein a planar area of the first diamond electrode is 1 mm$^2$ or more and 100 mm$^2$ or less.

6. The electrochemical sensor according to claim 2, wherein a variation in the sensitivity, calculated using the peak values of the current obtained in each linear sweep voltammetry measurement, is 30 % or less, when the linear sweep voltammetry measurements are performed over a plurality of times under the same ozone concentration condition in the test solution.

7. A method of manufacturing an electrochemical sensor, the method comprising:

arranging, on a support substrate, at least a first diamond electrode as a working electrode and a second diamond electrode as a reference electrode; and
performing a predetermined surface treatment on the first diamond electrode, wherein
performing the predetermined surface treatment involves

preparing a treatment solution containing ozone at a concentration of 10 ppm or more, and
in a state in which the first diamond electrode and the second diamond electrode are in contact with the treatment solution, sweeping a potential of the first diamond electrode against a potential of the second diamond electrode at a predetermined speed, and causing an electrochemical reaction on a surface of the first diamond electrode.

8. The method of manufacturing an electrochemical sensor according to claim 7, wherein the electrochemical reaction is caused over a plurality of times.

9. The method of manufacturing an electrochemical sensor according to claim 7, wherein the electrochemical reaction is caused in a state in which the treatment solution flows over the surface of the first diamond electrode.

10. The method of manufacturing an electrochemical sensor according to claim 7, wherein the electrochemical reaction is caused under a condition under which no peak appears in a voltammogram obtained when the electrochemical reaction is caused for linear sweep voltammetry measurement in which the potential of the first diamond electrode is swept against the potential of the second diamond electrode at a predetermined speed in a state in which the first diamond electrode and the second diamond electrode are in contact with the treatment solution.

11. The method of manufacturing an electrochemical sensor according to claim 7, wherein when causing the electrochemical reaction, the potential of the first diamond electrode is swept at a rate of 0.05 V/sec or more.

12. An electrochemical sensor system for measuring an ozone concentration in a test solution containing ozone at a predetermined concentration, the system comprising the electrochemical sensor according to any one of claims 1 to 6.

# FIG. 1

# FIG. 2

# FIG. 3

# FIG. 4

(a)

30a

21

22

31          31          31          31

(b)

15,16,17

21

22

21

22

# FIG. 5

**FIG. 6**

**FIG. 7**

**FIG. 8**

**FIG. 9**

**FIG. 10**

## FIG. 11

WE BDD(24.08mm$^2$)
RE BDD
CE BDD
0 to −1.3V
O$_3$ 5ppm

## FIG. 12

1.83 ppm
2.45 ppm
2.99 ppm
4.31 ppm
4.93 ppm
6.11 ppm
7.07 ppm
7.75 ppm
9.14 ppm

FIG. 13

## FIG. 14

**FIG. 15**

## INTERNATIONAL SEARCH REPORT

International application No.

**PCT/JP2023/018724**

### A. CLASSIFICATION OF SUBJECT MATTER

*G01N 27/30*(2006.01)i; *G01N 27/416*(2006.01)i; *G01N 27/48*(2006.01)i
FI: G01N27/48 311; G01N27/30 B; G01N27/416 311L

According to International Patent Classification (IPC) or to both national classification and IPC

### B. FIELDS SEARCHED

Minimum documentation searched (classification system followed by classification symbols)

G01N27/26-27/49

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2020/091033 A1 (KEIO UNIVERSITY) 07 May 2020 (2020-05-07) paragraphs [0075]-[0077], [0079], fig. 13, 27 | 1-12 |
| A | JP 2022-040521 A (SUMITOMO CHEMICAL CO., LTD.) 11 March 2022 (2022-03-11) paragraphs [0019]-[0023] | 1-12 |
| A | WO 2014/077017 A1 (KEIO UNIVERSITY) 22 May 2014 (2014-05-22) entire text, all drawings | 1-12 |
| A | JP 2007-212232 A (CENTRAL JAPAN RAILWAY CO.) 23 August 2007 (2007-08-23) claims, paragraphs [0040]-[0054], fig. 1 | 1-12 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **27 July 2023** | **08 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/018724**

| Patent document cited in search report | | | Publication date (day/month/year) | Patent family member(s) | Publication date (day/month/year) |
|---|---|---|---|---|---|
| WO | 2020/091033 | A1 | 07 May 2020 | (Family: none) | |
| JP | 2022-040521 | A | 11 March 2022 | (Family: none) | |
| WO | 2014/077017 | A1 | 22 May 2014 | US 2015/0330929 A1 entire text, all drawings CN 104838260 A | |
| JP | 2007-212232 | A | 23 August 2007 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP WO2020091033 A